# EUROPEAN PATENT SPECIFICATION

(11) **EP 4 007 440 B1**
(45) Date of publication and mention of the grant of the patent: **06.08.2025**
(21) Application number: 20853090.7
(22) Date of filing: 15.06.2020
(51) Int. Cl.: H04W 52/02, H04W 72/04, H04W 8/18, H04W 24/10, H04W 88/06, H04W 8/20

(54) **COMMUNICATION METHODS AND DEVICES**
KOMMUNIKATIONSVERFAHREN UND -VORRICHTUNGEN
PROCÉDÉS ET DISPOSITIFS DE COMMUNICATION

(30) Priority: 09.08.2019 CN 201910735950
(43) Date of publication of application: 01.06.2022
(73) Proprietor: Huawei Technologies Co., Ltd., Longgang District Shenzhen, Guangdong 518129 (CN)
(72) Inventor: XUE, Yifan, Shenzhen, Guangdong 518129 (CN); KUANG, Yiru, Shenzhen, Guangdong 518129 (CN); WANG, Jian, Shenzhen, Guangdong 518129 (CN); XU, Haibo, Shenzhen, Guangdong 518129 (CN); WANG, Zhou, Shenzhen, Guangdong 518129 (CN); HUANG, Wenqian, Shenzhen, Guangdong 518129 (CN); DU, Yifan, Shenzhen, Guangdong 518129 (CN)
(74) Representative: Goddar, Heinz J.
(86) International application number: PCT/CN2020/096193
(87) International publication number: WO 2021/027389

(56) References cited:
- EP-A1- 3 258 717
- WO-A1-2018/141148
- WO-A1-2018/141148
- CN-A- 105 873 195
- CN-A- 108 012 257
- US-A1- 2015 296 520
- US-A1- 2016 234 782
- US-A1- 2018 124 868

## Description

### TECHNICAL FIELD

Embodiments of this application relate to the field of communication technologies, and in particular, to a communications method and apparatus.

### BACKGROUND

A terminal device involved in a standardization process of a 3rd generation partnership project (3rd generation partnership project, 3GPP) is generally a terminal device into which a subscriber identification module (subscriber identification module, SIM) card is inserted. However, a dual-card or even multi-card terminal device already exists in the market at present, in other words, two or even more SIM cards are inserted into one terminal device. For such a terminal device, for each SIM card, the dual-card or even multi-card terminal device is used as a single-card terminal device to interact with a network side. This may result in a waste of resources.

EP 3258717 A1 describes a wireless communication apparatus for a wireless communication system comprising a receiver to receive communication signals, one or more processor to determine, based on the communication signals, that at least two SIM cards are located in one and the same wireless communication device of the wireless communication system, and the one or more processor further to coordinate requests for the at least two SIM cards that are located in the wireless communication device.

WO 2018 / 141148 A1 describes techniques that provide network assisted multi-subscription physical layer sharing at a user equipment by transmitting a multi-subscription coordination capability to a network, establishing a link for a first subscription with the network based on the multi-subscription coordination capability, and establishing a second subscription with the network using the link based on the multi-subscription coordination capability, the first subscription is associated with the second subscription.

US 2016/234782 A1 describes techniques relating to reducing power consumption in dual-SIM devices. In some embodiments, a UE includes at least two SIMs, including a home SIM and a configurable SIM. In this embodiment, the UE is configured to register, using a first protocol stack, the configurable SIM with a local network. In these embodiments, the UE is configured to determine if the local network is an available network for the home SIM. In these embodiments, the UE is configured to register, using the first protocol stack, the home SIM with the local network in response to determining that the local network is an available network for the home SIM. In these embodiments, the UE is configured to monitor, using the first protocol stack, for pages for each of the home SIM using the identifier of the home SIM and the configurable SIM using the identifier of the configurable SIM.

US 2018/124868 A1 describes provides methods for improving performance and reducing power consumption in a dual SIM dual standby (DSDS) device. The DSDS device allows a first SIM to use the RF resource for a data session while it restricts a second SIM from performing neighbor cell measurements when entry conditions are met.

### SUMMARY

This application provides communications methods, apparatus and a computer-readable storage medium to reduce a resource waste caused when a multi-card terminal device interacts with a network side.

The invention is defined by the independent claims. Advantageous embodiments of the invention are given by the dependent claims.

### BRIEF DESCRIPTION OF DRAWINGS

FIG. 1 is a schematic diagram of a communications system according to an embodiment of this application;
FIG. 2 is a schematic diagram of a protocol stack of a radio access network device according to an embodiment of this application;
FIG. 3 is a flowchart of a communications method according to an embodiment of this application;
FIG. 4A and FIG. 4B are a flowchart of a communications method according to another embodiment of this application;
FIG. 5A and FIG. 5B are a flowchart of a communications method according to another embodiment of this application;
FIG. 6A and FIG. 6B are a flowchart of a communications method according to another embodiment of this application;
FIG. 7A and FIG. 7B are a flowchart of a communications method according to another embodiment of this application;
FIG. 8A and FIG. 8B are a flowchart of a communications method according to another embodiment of this application;
FIG. 9A and FIG. 9B are a flowchart of a communications method according to another embodiment of this application;
FIG. 10A and FIG. 10B are a flowchart of a communications method according to another embodiment of this application;
FIG. 11A and FIG. 11B are a flowchart of a communications method according to another embodiment of this application;
FIG. 12A and FIG. 12B are a flowchart of a communications method according to another embodiment of this application;
FIG. 13A and FIG. 13B are a flowchart of a communications method according to another embodiment of this application;
FIG. 14A and FIG. 14B are a flowchart of a communications method according to another embodiment of this application;
FIG. 15 is a schematic diagram of a structure of a communications apparatus according to an embodiment of this application;
FIG. 16 is a schematic diagram of a structure of a communications apparatus according to another embodiment of this application;
FIG. 17 is a schematic diagram of a structure of a communications apparatus according to another embodiment of this application;
FIG. 18 is a schematic diagram of a structure of a terminal device according to an embodiment of this application; and
FIG. 19 is a schematic diagram of a structure of a communications system according to an embodiment of this application.

### DESCRIPTION OF EMBODIMENTS

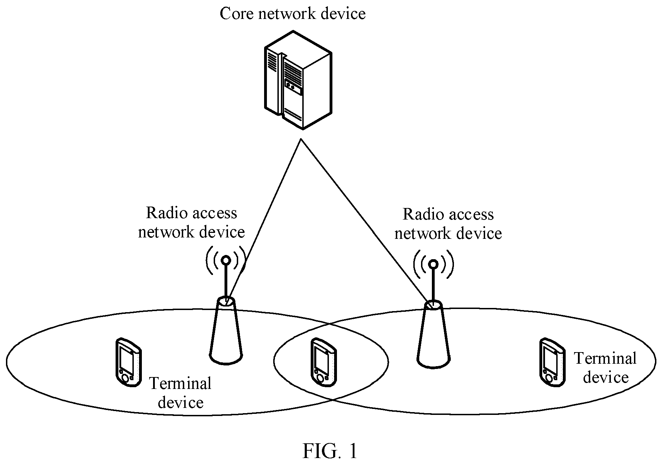

FIG. 1 is a schematic diagram of a communications system according to an embodiment of this application. As shown in FIG. 1, the communications system includes a network device and a terminal device, and the network device may include a radio access network device and a core network device. The terminal device is connected to the radio access network device in a wireless manner, and the radio access network device is connected to the core network device in a wireless or wired manner. The core network device and the radio access network device may be independent and different physical devices, or a function of the core network device and a logical function of the radio access network device may be integrated into a same physical device, or some functions of the core network device and some functions of the radio access network device may be integrated into one physical device. The terminal device may be at a fixed location or is movable. FIG. 1 is only a schematic diagram. The communications system may further include another network device, for example, may further include a wireless relay device and a wireless backhaul device, which are not shown in FIG. 1. Quantities of core network devices, radio access network devices, and terminal devices included in the communications system are not limited in some embodiments of this application. It should be noted that two radio access network devices shown in FIG. 1 may be connected to a same core network device, or may be connected to different core network devices.

The following explains some terms in this application to facilitate understanding by a person skilled in the art.

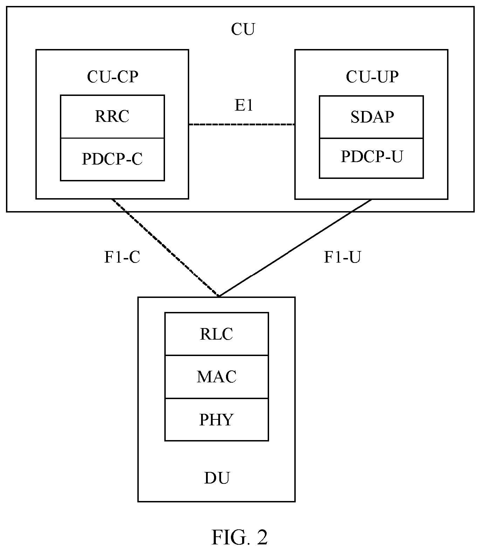

Radio access network (radio access network, RAN) device: The radio access network device is a device that connects a terminal device to a wireless network, and may be an evolved NodeB (evolutional Node B, eNB or eNodeB) in long term evolution (long term evolution, LTE), or may be a relay station or an access point, or may be a base station in a 5G network, such as a transmission and reception point (transmission and reception point, TRP) or a controller. This is not limited herein. In a possible manner, the radio access network device may be a base station (for example, a gNB) with a centralized unit (centralized unit, CU) and distributed unit (distributed unit, DU) split architecture, as shown in FIG. 2. FIG. 2 is a schematic diagram of a protocol stack of a radio access network device according to an embodiment of this application. The RAN device may be connected to a core network device (for example, a core network in LTE or a core network in 5G). A CU and a DU may be understood as division of a base station from the perspective of logical functions. The CU and the DU may be physically separated or deployed together. A plurality of DUs may share one CU. One DU may alternatively be connected to a plurality of CUs (not shown in the figure). The CU and the DU may be connected through an interface, for example, an F1 interface. The CU and the DU may be obtained through division based on protocol layers of a wireless network. For example, functions of a radio resource control (radio resource control, RRC) layer, a service data adaptation protocol (service data adaptation protocol, SDAP) layer, and a packet data convergence protocol (packet data convergence protocol, PDCP) layer are deployed on the CU, and functions of a radio link control (radio link control, RLC) layer, a media access control (media access control, MAC) layer, and a physical (physical, PHY) layer are deployed on the DU. It may be understood that processing function division of the CU and the DU based on the protocol layers is merely an example, and there may be other division. For example, the CU or the DU may have functions of more protocol layers through division. For example, the CU or the DU may alternatively have some processing functions of protocol layers through division. In a design, some functions of the RLC layer and functions of a protocol layer above the RLC layer are deployed on the CU, and remaining functions of the RLC layer and functions of a protocol layer below the RLC layer are deployed on the DU. In another design, functions of the CU or the DU may alternatively be obtained through division based on a service type or another system requirement. For example, division is performed based on a latency, functions whose processing time needs to satisfy a latency requirement are deployed on the DU, and functions whose processing time does not need to satisfy the latency requirement are deployed on the CU. In another design, the CU may alternatively have one or more functions of the core network. One or more CUs may be disposed in a centralized manner or a separated manner. For example, the CUs may be disposed on a network side for ease of centralized management. The DU may have a plurality of radio frequency functions, or the radio frequency functions may be remotely set.

Functions of the CU may be implemented by one entity, or may be implemented by different entities. For example, the functions of the CU may be further divided. For example, a control plane (CP) is separated from a user plane (UP), in other words, a CU control plane (CU-CP) and a CU user plane (CU-UP) are obtained. For example, the CU-CP and the CU-UP may be implemented by different function entities. The CU-CP and the CU-UP may be coupled to the DU to jointly implement functions of the base station. In a possible implementation, the CU-CP is responsible for control plane functions, and mainly includes an RRC and a PDCP-C. The PDCP-C is mainly responsible for data encryption and decryption, integrity protection, data transmission, and the like on the control plane. The CU-UP is responsible for user plane functions, and mainly includes an SDAP and a PDCP-U. The SDAP is mainly responsible for processing data of the core network and mapping a data flow (flow) to a bearer. The PDCP-U is mainly responsible for data plane encryption and decryption, integrity protection, header compression, serial number maintenance, data transmission, and the like. The CU-CP is connected to the CU-UP through an E1 interface. The CU-CP indicates that the gNB is connected to the core network through an Ng interface. The CU-CP is connected to the DU through an F1-C (control plane) interface. The CU-UP is connected to the DU through an F1-U (user plane) interface. Certainly, in another possible implementation, the PDCP-C is alternatively in the CU-UP.

Core network device: The core network device may be an access and mobility management function (access and mobility management function, AMF) network element, a session management function (session management function, SMF) network element, a mobility management entity (mobility management entity, MME), or another core network device. The AMF network element is mainly responsible for: connection to a wireless network, receiving and sending a NAS message for communicating with a terminal device, performing management such as registration, mobility, reachability, encryption, and authentication on the terminal device, and transmitting a NAS message between the terminal device and the SMF network element.

Terminal device: The terminal device may be a wireless terminal or a wired terminal. The wireless terminal may be a device having a wireless transceiver function, and may be deployed on land, including an indoor device, an outdoor device, a handheld device, or a vehicle-mounted device; or may be deployed on water (for example, a ship); or may be deployed in the air (for example, on a plane, a balloon, or a satellite). The terminal device may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. This is not limited herein. It may be understood that, in the embodiments of this application, the terminal device may also be referred to as user equipment (user equipment, UE).

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof means any combination of these items, including any combination of one item (piece) or a plurality of items (pieces). For example, at least one item (piece) of a, b, and c may indicate: a, b, c, a and b, a and c, band c, or a, b, and c, where a, b, and c may be singular or plural.

It may be understood that, in the embodiments of this application, the terminal device and/or the network device may perform some or all steps in the embodiments of this application. These steps or operations are merely examples. In the embodiments of this application, other operations or variations of various operations may be further performed. In addition, the steps may be performed in a sequence different from a sequence presented in the embodiments of this application, and not all operations in the embodiments of this application may be performed.

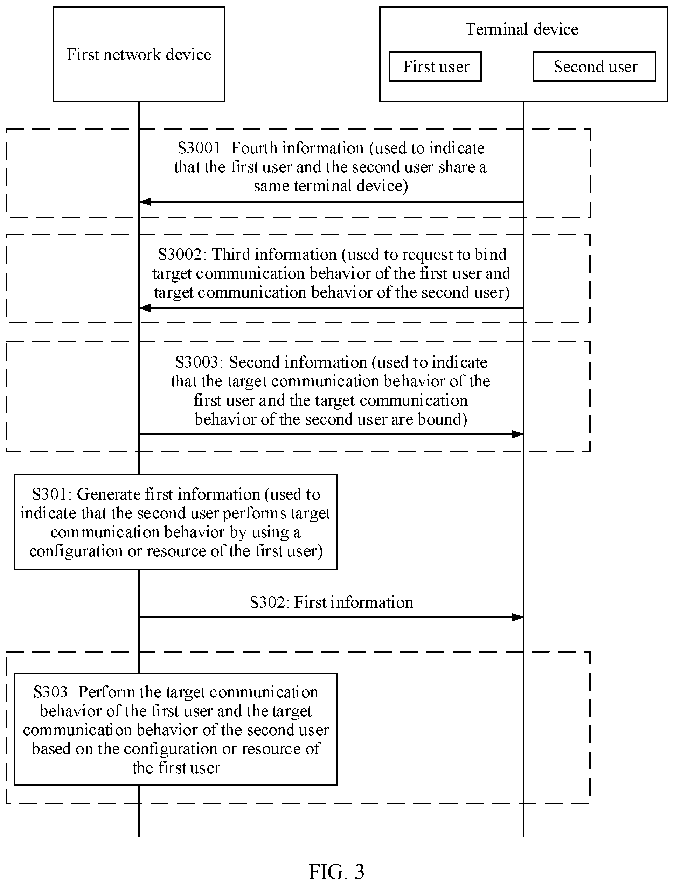

FIG. 3 is a flowchart of a communications method according to an embodiment of this application. As shown in FIG. 3, the method in this embodiment may include the following steps.

S301: A first network device generates first information.

S302: The first network device sends the first information to a first user and/or a second user. Correspondingly, a terminal device receives the first information through the first user and/or the second user.

S303: The terminal device determines, based on the first information, that the second user performs target communication behavior by using a configuration or resource of the first user.

Correspondingly, the terminal device receives, through the first user and/or the second user, the first information sent by the first network device.

In this embodiment, the first network device is a network device that the first user accesses or camps on. The first network device may generate the first information. The first information is used to indicate that the second user performs the target communication behavior by using the configuration or resource of the first user. Then, the first network device sends the first information to the terminal device. Correspondingly, the terminal device receives, through the first user and/or the second user, the first information sent by the first network device. The terminal device determines, based on the first information, that the second user may perform the target communication behavior by using the configuration or resource of the first user.

According to the communications method in this embodiment, the first network device generates the first information that is used to indicate that the second user performs the target communication behavior by using the configuration or resource of the first user, and then sends the first information to the terminal device. The terminal device receives the first information from the first network device through the first user and/or the second user, and determines, based on the first information, that the second user performs the target communication behavior by using the configuration or resource of the first user. Because the second user can perform the target communication behavior by using the configuration or resource of the first user, communication resources can be saved.

Optionally, the first user and the second user share a same terminal device. Therefore, when the target communication behavior of the second user is executed, a waste of resources for interaction between the terminal device and a network side can be reduced. Alternatively, when the target communication behavior of the second user is executed, some calculation/measurement results obtained by the first user may be used, to reduce unnecessary calculation/measurement steps.

Optionally, the first user is a first user identity card, the second user is a second user identity card, and the first user identity card is a primary user identity card on the terminal device. Therefore, when target communication behavior of the second user identity card is executed, a waste of resources for interaction between a multi-card terminal device (for example, a dual-card terminal device) and the network side may be reduced, or a calculation amount of the multi-card terminal device may be reduced to reduce power consumption.

Optionally, PLMNs of the first network device and a second network device are the same, and the second network device is a network device that the second user accesses or camps on. The PLMN is used to distinguish different mobile communication operators in a country or region. If the PLMNs of the first network device and the second network device are the same, the first network device and the second network device belong to a same mobile communication operator. Optionally, the first network device and the second network device may alternatively be a same network device.

Optionally, the target communication behavior may include one or more of the following: behavior of receiving paging, RRM measurement, RLM measurement, channel state measurement, transmission of a transmission configuration indicator state, camping on a cell, and reception of a system information block.

In some embodiments, before S301 is performed, the method may further include:
S3003: The first network device sends second information to the first user and/or the second user. Correspondingly, the terminal device receives, through the first user and/or the second user, the second information sent by the first network device.

In this embodiment, the first network device sends the second information to the first user and/or the second user. The second information is used to indicate that target communication behavior of the first user and the target communication behavior of the second user are bound. The terminal device receives, through the first user and/or the second user, the second information sent by the first network device. The terminal device may determine, based on the second information, that the target communication behavior of the first user and the target communication behavior of the second user are bound. For example, the second information may be included in RRC signaling, a MAC CE, or DCI sent by the first network device, or the second information may be included in broadcast signaling sent by the first network device. The broadcast signaling is, for example, a system information block (system information block, SIB).

In some embodiments, before S3003 is performed, the method may further include:
S3002: The terminal device sends, through the first user and/or the second user, third information to the first network device. Correspondingly, the first network device receives the third information sent by the terminal device through the first user and/or the second user.

In this embodiment, the terminal device sends the third information to the first network device through the first user and/or the second user. The third information is used to request to bind the target communication behavior of the first user and the target communication behavior of the second user. Correspondingly, the first network device receives the third information sent by the terminal device, and binds the target communication behavior of the first user and the target communication behavior of the second user based on the third information.

In some embodiments, before S3002 is performed, the method may further include:
S3001: The terminal device sends, through the first user and/or the second user, fourth information to the first network device. Correspondingly, the first network device receives the fourth information sent by the terminal device through the first user and/or the second user.

In this embodiment, the terminal device sends the fourth information to the first network device through the first user and/or the second user. The fourth information is used to indicate that the first user and the second user share the same terminal device.

Optionally, the fourth information may include identification information of the first user and/or the second user. Optionally, the identification information may include any one or more of the following: an international mobile equipment identity (international mobile equipment identity, IMEI), a mobile equipment identifier (mobile equipment identifier, MEID), an international mobile subscriber identity (international mobile subscriber identity, IMSI), a temporary mobile subscriber identity (temporary mobile subscriber identity, TMSI), a packet-temporary mobile subscriber identity (packet-temporary mobile subscriber identity, P-TMSI), an integrate circuit card identity (integrate circuit card identity, ICCID), a mobile subscriber integrated service digital network number (mobile subscriber integrated service digital network number, MSISDN), a mobile station roaming number (mobile station roaming number, MSRN), a serial number (serial number, SN), and a radio network temporary identity (radio network temporary identity, RNTI).

If the fourth information includes the identification information of the first user, the fourth information includes any one or more of an IMEI, an MEID, an IMSI, a TMSI, a P-TMSI, an ICCID, an MSISDN, an MSRN, an SN, and an RNTI of the first user.

If the fourth information includes the identification information of the second user, the fourth information includes any one or more of an IMEI, an MEID, an IMSI, a TMSI, a P-TMSI, an ICCID, an MSISDN, an MSRN, an SN, and an RNTI of the second user.

If the fourth information includes the identification information of the first user and the identification information of the second user, the fourth information includes any one or more of an IMEI, an MEID, an IMSI, a TMSI, a P-TMSI, an ICCID, an MSISDN, an MSRN, an SN, and an RNTI of the first user, and any one or more of an IMEI, an MEID, an IMSI, a TMSI, a P-TMSI, an ICCID, an MSISDN, an MSRN, an SN, and an RNTI of the second user.

The first network device receives the fourth information sent by the terminal device through the first user and/or the second user, and determines, based on the fourth information, that the first user and the second user share the same terminal device.

In some embodiments, after S302 is performed, the method may further include:
S304: The first network device performs the target communication behavior of the first user and the target communication behavior of the second user based on the configuration or resource of the first user.

In this embodiment, when the target communication behavior of the first user needs to be executed, the first network device executes the target communication behavior of the first user based on the configuration or resource of the first user; and when the target communication behavior of the second user needs to be executed, the first network device executes the target communication behavior of the second user based on the configuration or resource of the first user.

In some embodiments, after S303 is performed, the method may further include:
S305: The terminal device performs the target communication behavior of the first user and the target communication behavior of the second user based on the configuration or resource of the first user.

In this embodiment, when the target communication behavior of the first user needs to be executed, the terminal device executes the target communication behavior of the first user based on the configuration or resource of the first user; and when the target communication behavior of the second user needs to be executed, the terminal device executes the target communication behavior of the second user based on the configuration or resource of the first user.

Because the second user can use the configuration or resource of the first user, resources can be saved.

Optionally, in the embodiments of this application, the target communication behavior may include one or more of the following: behavior of receiving paging, RRM measurement, RLM measurement, channel state measurement, transmission of a transmission configuration indicator state, camping on a cell, and reception of a system information block. Next, different target communication behaviors are separately described in detail.

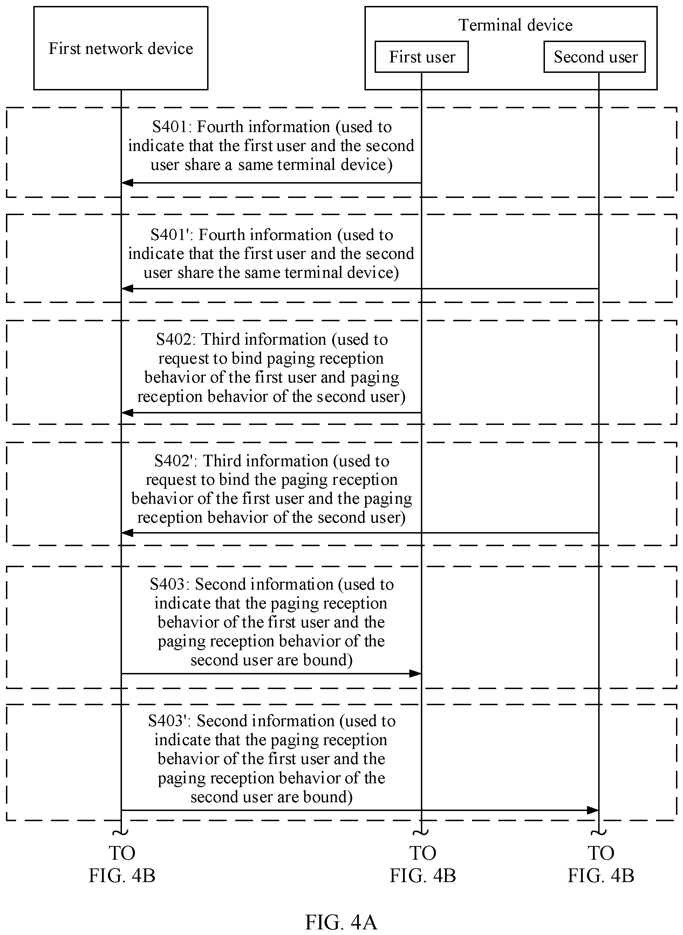

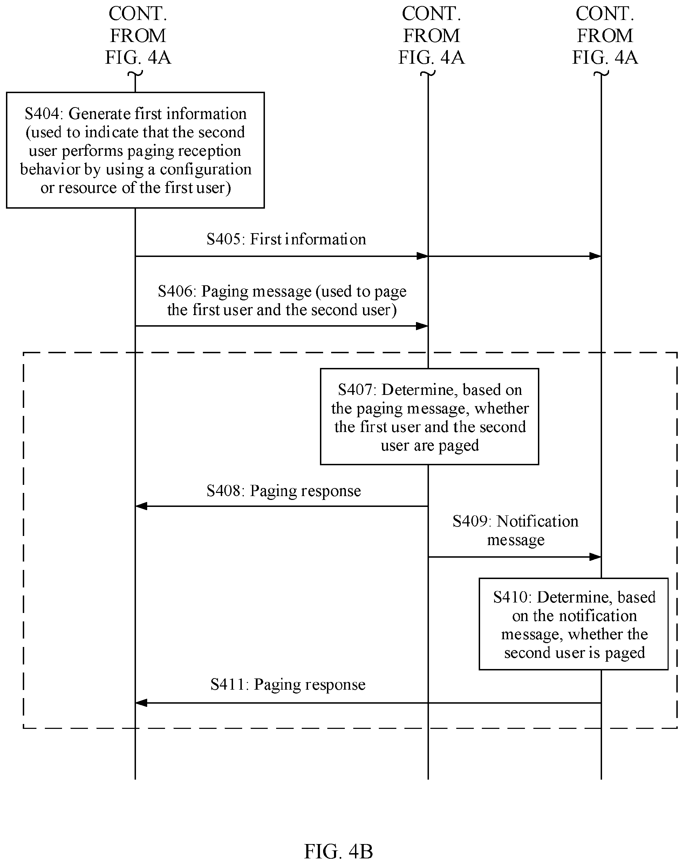

FIG. 4A and FIG. 4B are a flowchart of a communications method according to another embodiment of this application. In this embodiment, target communication behavior is behavior of receiving paging. As shown in FIG. 4A and FIG. 4B, the method in this embodiment may include the following steps.

S401: A terminal device sends fourth information to a first network device through a first user. Correspondingly, the first network device receives the fourth information sent by the terminal device through the first user. The fourth information is used to indicate that the first user and a second user share a same terminal device.

S401': The terminal device sends the fourth information to the first network device through the second user. Correspondingly, the first network device receives the fourth information sent by the terminal device through the second user. The fourth information is used to indicate that the first user and the second user share the same terminal device.

It should be noted that in some embodiments of this application, at least one of S401 and S40 1' may be performed. Optionally, in some embodiments of this application, S401 and S401' may be performed by using a same piece of signaling, or S401 and S401' may be separately performed by using two pieces of signaling.

S402: The terminal device sends third information to the first network device through the first user. Correspondingly, the first network device receives the third information sent by the terminal device through the first user. The third information is used to request to bind paging reception behavior of the first user and paging reception behavior of the second user.

S402': The terminal device sends the third information to the first network device through the second user. Correspondingly, the first network device receives the third information sent by the terminal device through the second user. The third information is used to request to bind the paging reception behavior of the first user and the paging reception behavior of the second user.

It should be noted that in some embodiments of this application, at least one of S402 and S402' may be performed. Optionally, in some embodiments of this application, S402 and S402' may be performed by using a same piece of signaling, or S402 and S402' may be separately performed by using two pieces of signaling.

S403: The first network device sends second information to the first user. Correspondingly, the terminal device receives, through the first user, the second information sent by the first network device. The second information is used to indicate that the paging reception behavior of the first user and the paging reception behavior of the second user are bound.

S403': The first network device sends the second information to the second user. Correspondingly, the terminal device receives, through the second user, the second information sent by the first network device. The second information is used to indicate that the paging reception behavior of the first user and the paging reception behavior of the second user are bound.

It should be noted that in some embodiments of this application, at least one of S403 and S403' may be performed. Optionally, in some embodiments of this application, S403 and S403' may be performed by using a same piece of signaling, or S403 and S403' may be separately performed by using two pieces of signaling.

In this embodiment, for S401 to S403 and S401' to S403', refer to related descriptions in the foregoing embodiments. Details are not described herein again.

S404: The first network device generates first information.

S405: The first network device sends the first information to the first user and/or the second user. Correspondingly, the terminal device receives the first information through the first user and/or the second user.

S406: The terminal device determines, based on the first information, that the second user receives paging by using a configuration or resource of the first user.

In this embodiment, the first information is used to indicate that the second user performs the behavior of answering paging by using the configuration or resource of the first user. For S404 to S406, refer to related descriptions in the foregoing embodiments. Details are not described herein again.

S407: The first network device sends a paging message to the first user. Correspondingly, the terminal device receives, through the first user, the paging message sent by the first network device.

S408: The first user determines, based on the paging message, that the first user and the second user are paged.

S409: The terminal device sends a paging response to the first network device through the first user.

S410: The first user outputs a notification message to the second user. An execution sequence of S409 and S410 is not limited.

S411: The second user determines, based on the notification message output by the first user, that the second user is paged.

S412: The terminal device sends the paging response to the first network device through the second user.

In this embodiment, the first network device sends the paging message to the first user. The paging message is used to page the first user and the second user. When the first user and the second user share the same terminal device, the first user answers the paging message, and the second user does not answer the paging message. Therefore, the terminal device receives, through the first user, the paging message sent by the first network device, and determines, based on the paging message, whether the first user and the second user are paged. If the first user determines, based on the paging message, that the first user is paged, the first user may respond to the paging message according to a procedure in the conventional technology, that is, perform S409. If the first user determines, based on the paging message, that the second user is paged, the first user outputs the notification message to the second user. The notification message is used to indicate that the second user is paged. The second user obtains the notification message output by the first user, and determines, based on the notification message, that the second user is paged. In this case, the second user may respond to the paging message according to a procedure in the conventional technology, that is, perform S412.

According to the communications method provided in this embodiment, because the second user can answer the paging by using the configuration or resource of the first user, when the first network device needs to page the first user and the second user, the second user may not need to receive the paging message, thereby reducing power consumption of the terminal device. In addition, the first network device may alternatively choose not to send the paging message at a location at which the second user receives the paging, thereby reducing signaling overheads and saving air interface resources.

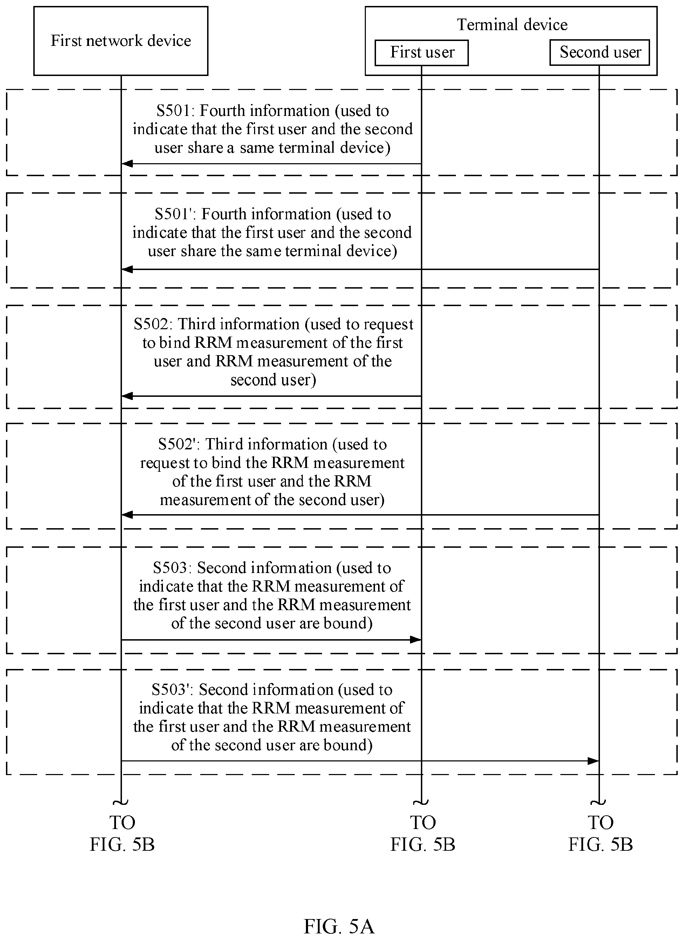

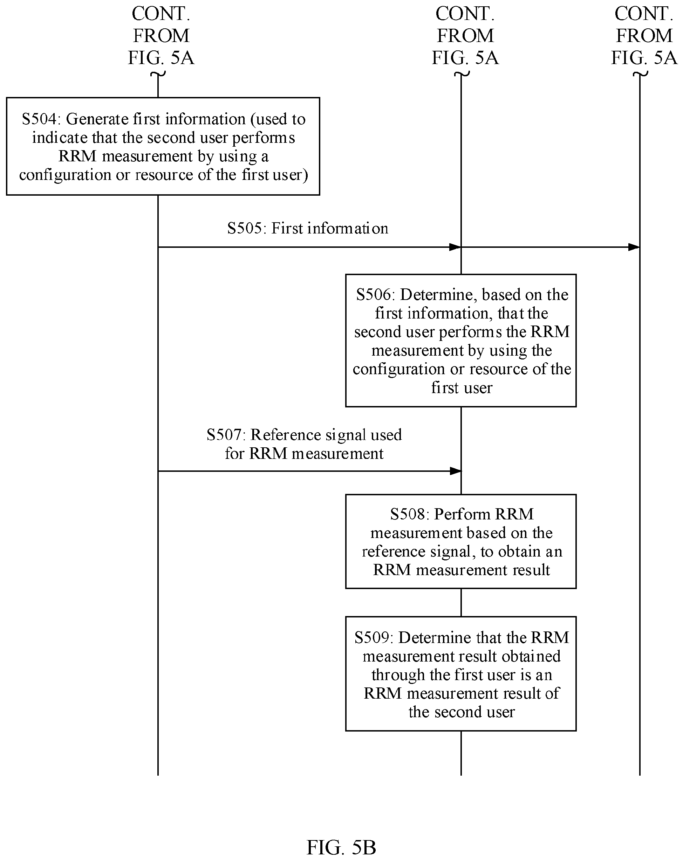

FIG. 5A and FIG. 5B are a flowchart of a communications method according to another embodiment of this application. In this embodiment, target communication behavior is RRM measurement. As shown in FIG. 5A and FIG. 5B, the method in this embodiment may include the following steps.

S501: A terminal device sends fourth information to a first network device through a first user. Correspondingly, the first network device receives the fourth information sent by the terminal device through the first user. The fourth information is used to indicate that the first user and a second user share a same terminal device.

S501': The terminal device sends the fourth information to the first network device through the second user. Correspondingly, the first network device receives the fourth information sent by the terminal device through the second user. The fourth information is used to indicate that the first user and a second user share a same terminal device.

It should be noted that in some embodiments of this application, at least one of S501 and S501' may be performed. Optionally, in some embodiments of this application, S501 and S501' may be performed by using a same piece of signaling, or S501 and S501' may be separately performed by using two pieces of signaling.

S502: The terminal device sends third information to the first network device through the first user. Correspondingly, the first network device receives the third information sent by the terminal device through the first user. The third information is used to request to bind RRM measurement of the first user and RRM measurement of the second user.

S502': The terminal device sends the third information to the first network device through the second user. Correspondingly, the first network device receives the third information sent by the terminal device through the second user. The third information is used to request to bind the RRM measurement of the first user and the RRM measurement of the second user.

It should be noted that in some embodiments of this application, at least one of S502 and S502' may be performed. Optionally, in some embodiments of this application, S502 and S502' may be performed by using a same piece of signaling, or S502 and S502' may be separately performed by using two pieces of signaling.

S503: The first network device sends second information to the first user. Correspondingly, the terminal device receives, through the first user, the second information sent by the first network device. The second information is used to indicate that the RRM measurement of the first user and the RRM measurement of the second user are bound.

S503': The first network device sends the second information to the second user. Correspondingly, the terminal device receives, through the second user, the second information sent by the first network device. The second information is used to indicate that the RRM measurement of the first user and the RRM measurement of the second user are bound.

It should be noted that in some embodiments of this application, at least one of S503 and S503' may be performed. Optionally, in some embodiments of this application, S503 and S503' may be performed by using a same piece of signaling, or S503 and S503' may be separately performed by using two pieces of signaling.

In this embodiment, for S501 to S503 and S501' to S503', refer to related descriptions in the foregoing embodiments. Details are not described herein again.

S504: The first network device generates first information.

S505: The first network device sends the first information to the first user and/or the second user. Correspondingly, the terminal device receives the first information through the first user and/or the second user.

S506: The terminal device determines, based on the first information, that the second user performs the RRM measurement by using a configuration or resource of the first user.

In this embodiment, the first information is used to indicate that the second user performs the RRM measurement by using the configuration or resource of the first user. For S504 to S506, refer to related descriptions in the foregoing embodiments. Details are not described herein again.

S507: The first network device sends a reference signal used for RRM measurement to the first user. Correspondingly, the terminal device receives, through the first user, the reference signal that is used for RRM measurement and sent by the first network device.

S508: The terminal device performs RRM measurement based on the reference signal through the first user, to obtain an RRM measurement result.

S509: The terminal device determines that the RRM measurement result obtained through the first user is an RRM measurement result of the second user.

Because a user is mobile, and may move from a coverage area of one cell to a coverage area of another cell. Therefore, cell reselection or cell handover may be involved. The user determines that the user is under a coverage area of a cell based on RRM measurement.

In this embodiment, the first network device sends the reference signal used for RRM measurement to the first user. When the first user and the second user share the same terminal device, the first user performs the RRM measurement, and the second user does not perform the RRM measurement. Therefore, the terminal device receives, through the first user, the reference signal that is used for RRM measurement and sent by the first network device. The terminal device performs, through the first user, the RRM measurement based on the received reference signal that is used for RRM measurement. Further, the terminal device determines that the RRM measurement result obtained by the first user is the RRM measurement result of the second user.

That the terminal device performs the RRM measurement based on the reference signal through the first user may be implemented in a manner in the conventional technology. For example, the first user obtains a power value of a signal based on the received reference signal, and determines, based on the obtained power value of the signal, whether some measurement events are triggered.

In this embodiment, because the second user can perform the RRM measurement by using the configuration or resource of the first user, when the first network device needs to perform the RRM measurement, the second user may not perform the RRM measurement. The second user may use the RRM measurement result obtained by the first user. This can reduce unnecessary calculation/measurement steps, thereby reducing power consumption of the terminal device.

Because states of the first user and the second user are different, the following plurality of scenarios may exist:

Scenario 1: Both the first user and the second user are in a connected mode.

Scenario 2: The first user is in a connected mode, and the second user is in an idle mode.

Scenario 3: Both the first user and the second user are in an idle mode.

Because states of the first user and the second user are different, after the terminal device performs S509 in the foregoing embodiment, the following several different cases may exist. The following separately describes in detail the foregoing scenario 1, scenario 2, and scenario 3 by using several specific embodiments.

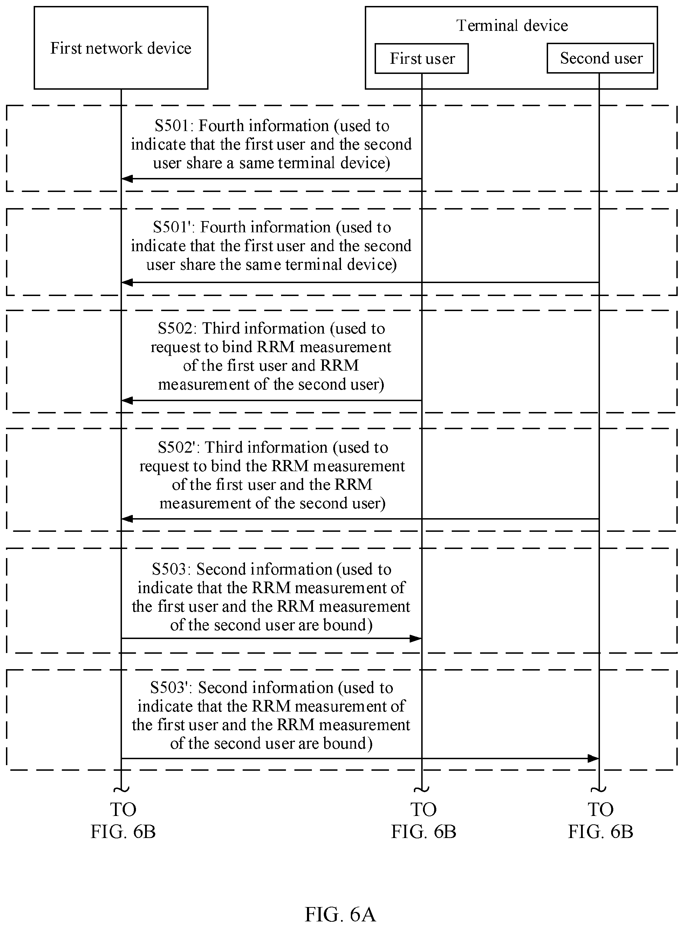

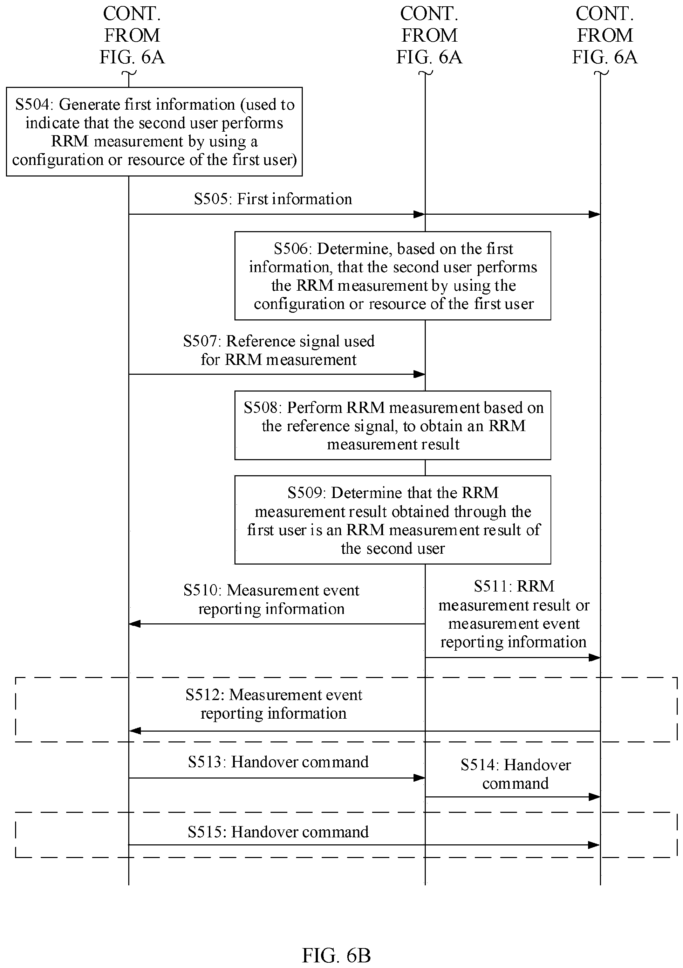

FIG. 6A and FIG. 6B are a flowchart of a communications method according to another embodiment of this application. In this embodiment, both the first user and the second user are in the connected mode. As shown in FIG. 6A and FIG. 6B, the method shown in this embodiment is based on the embodiment shown in FIG. 5A and FIG. 5B, and after the terminal device performs S509 in the foregoing embodiment, the method may further include the following steps:
S510: The first user sends measurement event reporting information to the first network device based on the RRM measurement result.
S511: The first user outputs the RRM measurement result or the measurement event reporting information to the second user.

An execution sequence of S510 and S511 is not limited.

S512: The second user sends measurement event reporting information to the first network device based on the RRM measurement result or the measurement event reporting information output by the first user.

Optionally, if the first user or the second user negotiates with the first network device, the second user may receive the RRM measurement result or the measurement event reporting information output by the first user, but the second user does not send the measurement event reporting information to the first network device. Because the first user or the second user negotiates with the first network device, the first user sends the measurement event reporting information to the first network device, and the first network device may consider that the second user reports the same measurement event reporting information.

S513: The first network device sends a handover command to the first user. Correspondingly, the terminal device receives, through the first user, the handover command sent by the first network device.

In some embodiments, after the terminal device receives, through the first user, the handover command sent by the first network device, the terminal device outputs the handover command to the second user through the first user, that is, performs S514.

S514: The terminal device outputs the handover command to the second user through the first user.

Alternatively, in some other embodiments, the first network device not only sends the handover command to the first user, but the first network device further sends the handover command to the second user, that is, performs S515.

S515: The first network device sends the handover command to the second user. Correspondingly, the terminal device receives, through the second user, the handover command sent by the first network device.

If the first network device separately sends the handover command to the first user and the second user, S513 and S515 are performed in no sequence.

In this embodiment, if the first user determines, based on the RRM measurement result, that a measurement event needs to be reported, the first user sends the measurement event reporting information to the first network device, and the first user outputs the RRM measurement result or the measurement event reporting information to the second user, and the second user may send the measurement event reporting information to the first network device. If the first user or the second user negotiates with the first network device, the second network device may not send the measurement event reporting information to the first network device. Then, the first network device sends the handover command to the first user and the second user based on the measurement event reporting information sent by the first user and the measurement event reporting information sent by the second user, or the first network device sends the handover command to the first user, and the first user outputs the handover command to the second user. The handover command is used to indicate cell handover of the first user and the second user. The first user and the second user perform cell handover according to the handover command. After executing the handover command, the first user and the second user access or camp on a same cell.

In the communications method provided in this embodiment, because the second user can perform the RRM measurement by using the configuration or resource of the first user, if the first network device needs to perform the RRM measurement, the first user performs the RRM measurement, and the second user does not perform the RRM measurement. The second user may use the RRM measurement result obtained by the first user. This can reduce unnecessary calculation/measurement steps, thereby reducing power consumption of the terminal device. In addition, if the first network device determines, based on the RRM measurement result, that the terminal device needs to perform cell handover, the first network device sends the handover command to the terminal device. The handover command is used to indicate cell handover of the first user and the second user, and the first user and the second user perform cell handover according to the handover command. In the foregoing manner, the first user and the second user keep camping on a same cell, thereby facilitating mobility management. In addition, when the first user or the second user negotiates with the first network device, if the first user sends the measurement event reporting information to the first network device, the second user does not send the measurement event reporting information to the first network device. In this case, no interaction is required between the second user and the first network device. This can reduce a waste of resources for interaction between the terminal device and a network device, and reduce signaling overheads.

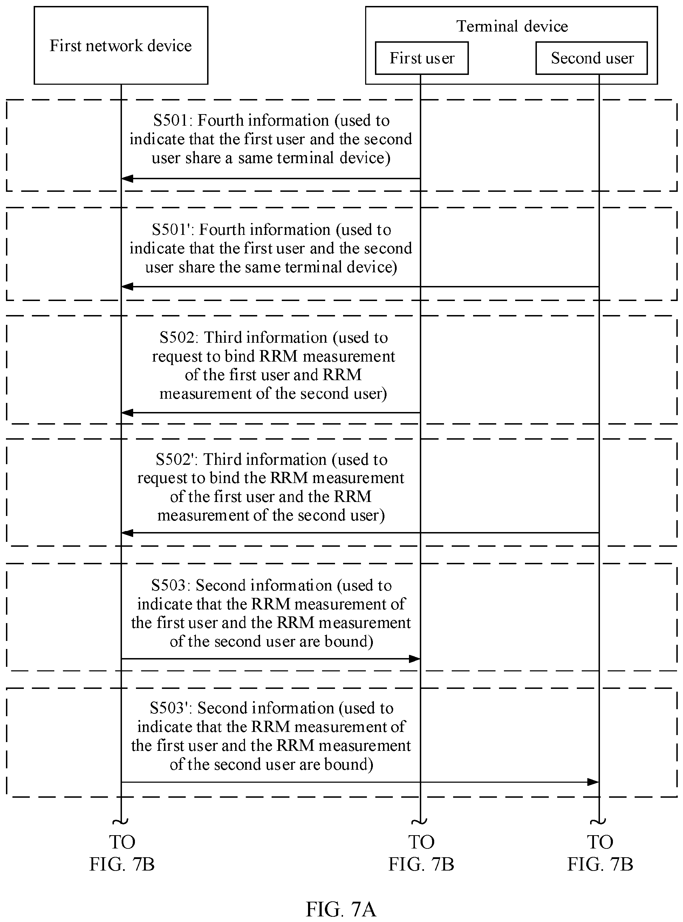

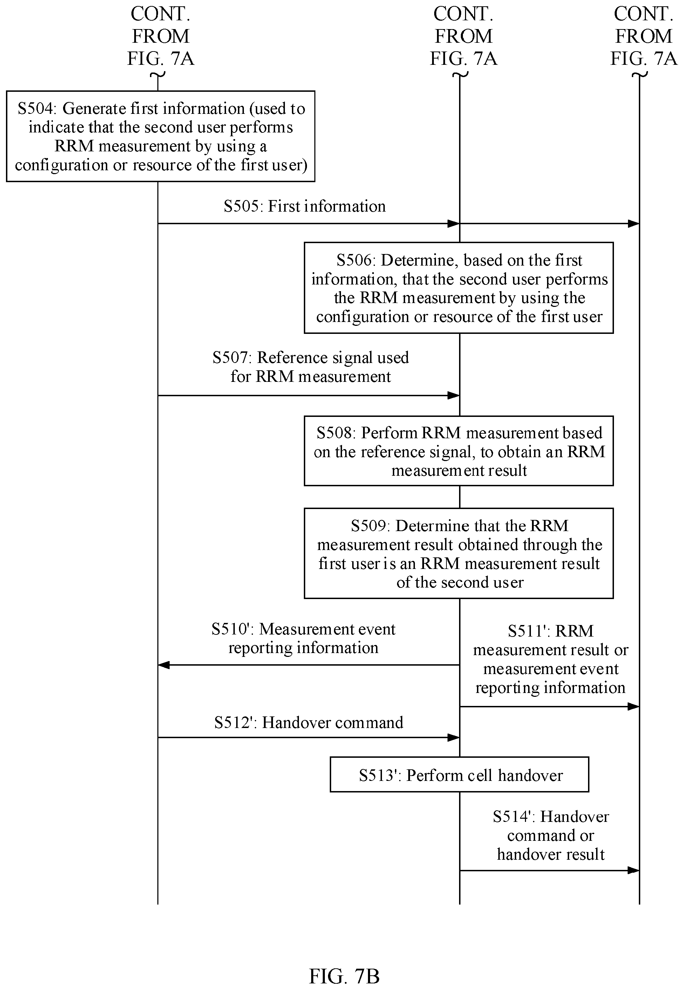

FIG. 7A and FIG. 7B are a flowchart of a communications method according to another embodiment of this application. In this embodiment, the first user is in the connected mode, and the second user is in the idle mode. As shown in FIG. 7A and FIG. 7B, the method shown in this embodiment is based on the embodiment shown in FIG. 5A and FIG. 5B, and after the terminal device performs S509 in the foregoing embodiment, the method may further include the following steps:
S510': The first user sends measurement event reporting information to the first network device based on the RRM measurement result.
S511': The first user outputs the RRM measurement result or the measurement event reporting information to the second user.

An execution sequence of S510' and S511' is not limited.

S512': The first network device sends a handover command to the first user. Correspondingly, the terminal device receives, through the first user, the handover command sent by the first network device.

S513': The first user performs cell handover according to the handover command sent by the first network device.

S514': The first user outputs the handover command or a handover result to the second user.

If the first user outputs the handover command to the second user, S513' and S514' are performed in no sequence. If the first user outputs the handover result to the second user, the terminal device first performs S513' and then performs S514'.

In this embodiment, if the first user determines, based on the RRM measurement result, that a measurement event needs to be reported, the first user sends the measurement event reporting information to the first network device, and the first user outputs the RRM measurement result or the measurement event reporting information to the second user. Because the second user is in the idle mode, the second user does not need to send the measurement event reporting information to the first network device. Then, after receiving the measurement event report information sent by the first user, the first network device sends the handover command to the first user. The handover command is used to indicate cell handover of the first user and the second user. Because the second user is in the idle mode, and the second user is not connected to the first network device, the first user may output the handover command or the handover result to the second user. The handover command or the handover result output by the first user to the second user is used to help the second user reselect a cell on which the second user camps. That is, S514' is performed. The first user performs cell handover according to the handover command sent by the first network device, and the second user may perform cell reselection according to the handover command or the handover result output by the first user. After the second user performs cell reselection, the second user camps on a cell accessed by the first user.

In this embodiment, because the second user can perform the RRM measurement by using the configuration or resource of the first user, if the first network device needs to perform the RRM measurement, the first user performs the RRM measurement, and the second user does not perform the RRM measurement. The second user may use the RRM measurement result obtained by the first user. This can reduce unnecessary calculation/measurement steps, thereby reducing power consumption of the terminal device. In addition, if the first network device determines, based on the RRM measurement result, that the terminal device needs to perform cell handover, the first network device sends the handover command to the terminal device. The handover command is used to indicate the first user to perform cell handover according to the handover command, and the second user to perform cell reselection according to the handover command or the handover result output by the first user. In the foregoing manner, the first user and the second user keep accessing or camping on a same cell, thereby facilitating mobility management.

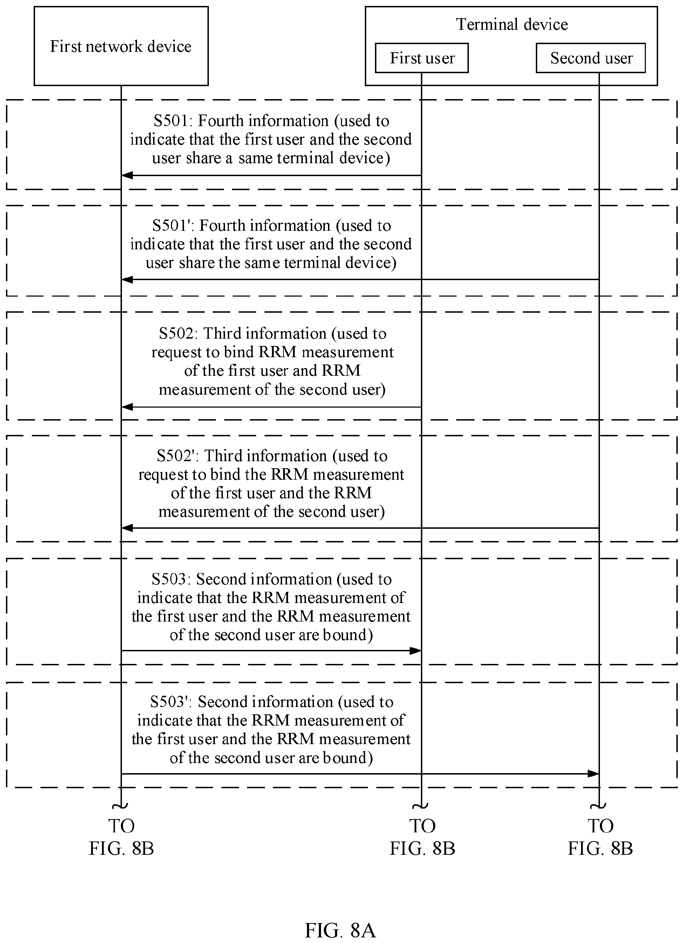

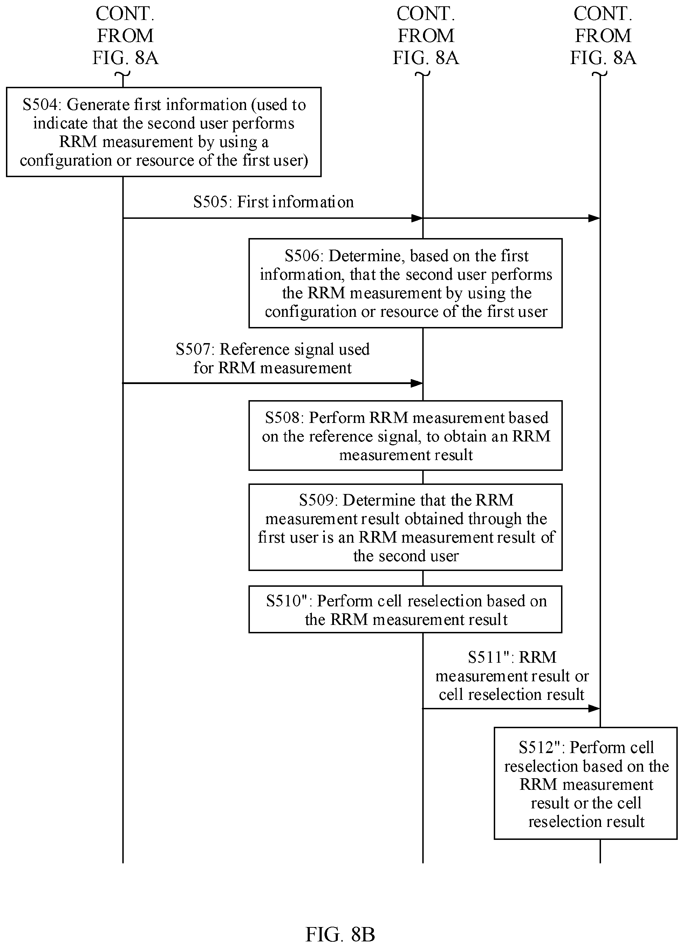

FIG. 8A and FIG. 8B are a flowchart of a communications method according to another embodiment of this application. In this embodiment, both the first user and the second user are in the idle mode. As shown in FIG. 8A and FIG. 8B, the method shown in this embodiment is based on the embodiment shown in FIG. 5A and FIG. 5B, and after the terminal device performs S509 in the foregoing embodiment, the method may further include the following steps:
S510": The first user performs cell reselection based on the RRM measurement result.
S511": The first user outputs the RRM measurement result or a cell reselection result to the second user.
S512": The second user performs cell reselection based on the RRM measurement result or the cell reselection result output by the first user.

In this embodiment, if the first user outputs the RRM measurement result to the second user, an execution sequence of S510" and S511" is not limited. If the first user outputs the cell reselection result to the second user, S510" is first performed and then S511" is performed. After the first user and the second user perform cell reselection, the first user and the second user camp on a same cell.

In the communications method provided in this embodiment, because the second user can perform the RRM measurement by using the configuration or resource of the first user, when the first network device needs to perform the RRM measurement, the first user performs the RRM measurement, and the second user does not perform the RRM measurement. The second user may use the RRM measurement result obtained by the first user. This can reduce unnecessary calculation/measurement steps, thereby reducing power consumption of the terminal device. The second user performs cell reselection based on the cell reselection result output by the first user. In the foregoing manner, the first user and the second user keep camping on a same cell after performing cell reselection, thereby facilitating mobility management.

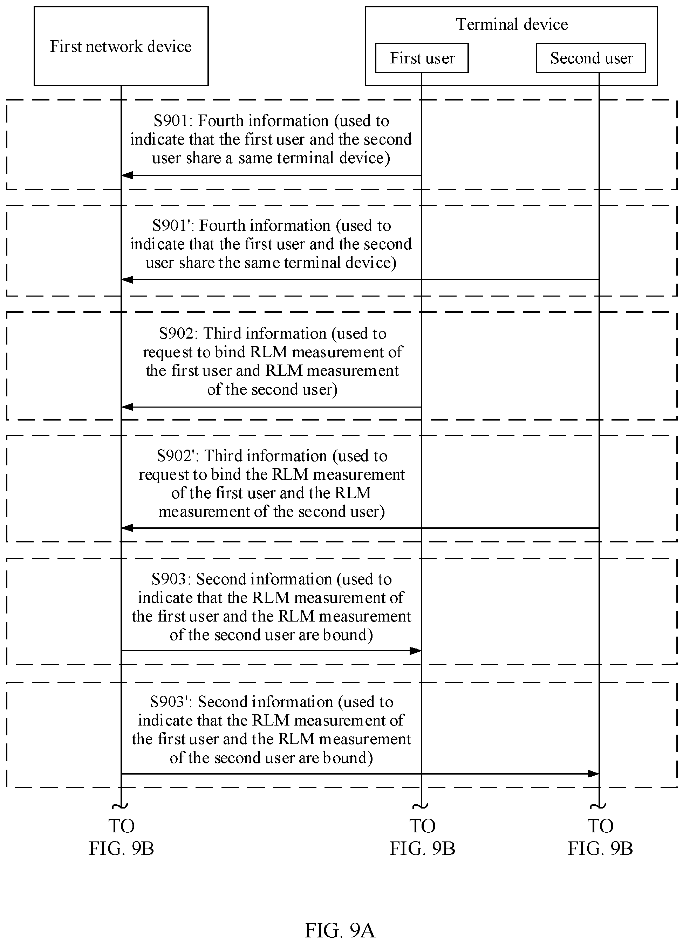

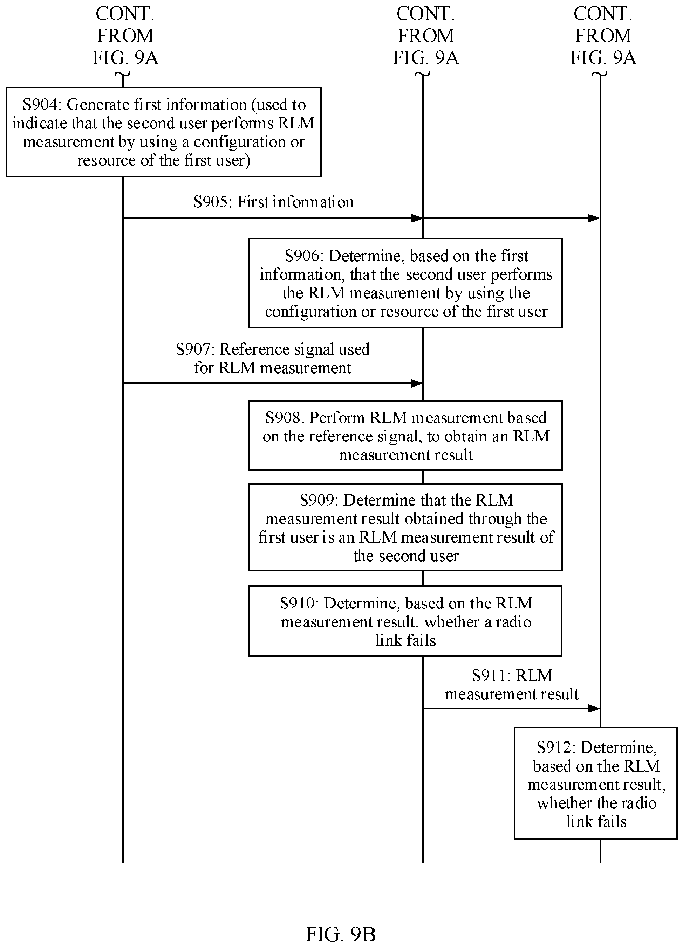

FIG. 9A and FIG. 9B are a flowchart of a communications method according to another embodiment of this application. In this embodiment, target communication behavior is RLM measurement. As shown in FIG. 9A and FIG. 9B, the method in this embodiment includes the following steps:
S901: A terminal device sends fourth information to a first network device through a first user. Correspondingly, the first network device receives the fourth information sent by the terminal device through the first user. The fourth information is used to indicate that the first user and a second user share a same terminal device.
S901': The terminal device sends the fourth information to the first network device through the second user. Correspondingly, the first network device receives the fourth information sent by the terminal device through the second user. The fourth information is used to indicate that the first user and a second user share a same terminal device.

It should be noted that in some embodiments of this application, at least one of S901 and S901' may be performed. Optionally, in some embodiments of this application, S901 and S901' may be performed by using a same piece of signaling, or S901 and S901' may be separately performed by using two pieces of signaling.

S902: The terminal device sends third information to the first network device through the first user. Correspondingly, the first network device receives the third information sent by the terminal device through the first user. The third information is used to request to bind RLM measurement of the first user and RLM measurement of the second user.

S902': The terminal device sends the third information to the first network device through the second user. Correspondingly, the first network device receives the third information sent by the terminal device through the second user. The third information is used to request to bind RLM measurement of the first user and RLM measurement of the second user.

It should be noted that in some embodiments of this application, at least one of S902 and S902' may be performed. Optionally, in some embodiments of this application, S902 and S902' may be performed by using a same piece of signaling, or S902 and S902' may be separately performed by using two pieces of signaling.

S903: The first network device sends second information to the first user. Correspondingly, the terminal device receives, through the first user, the second information sent by the first network device. The second information is used to indicate that the RLM measurement of the first user and the RLM measurement of the second user are bound.

S903': The first network device sends the second information to the second user. Correspondingly, the terminal device receives, through the second user, the second information sent by the first network device. The second information is used to indicate that the RLM measurement of the first user and the RLM measurement of the second user are bound.

It should be noted that in some embodiments of this application, at least one of S903 and S903' may be performed. Optionally, in some embodiments of this application, S903 and S903' may be performed by using a same piece of signaling, or S903 and S903' may be separately performed by using two pieces of signaling.

In this embodiment, for S901 to S903 and S901' to S903', refer to related descriptions in the foregoing embodiments. Details are not described herein again.

S904: The first network device generates first information.

S905: The first network device sends the first information to the first user and/or the second user. Correspondingly, the terminal device receives the first information through the first user and/or the second user.

S906: The terminal device determines, based on the first information, that the second user performs the RLM measurement by using a configuration or resource of the first user.

In this embodiment, the first information is used to indicate that the second user performs the RLM measurement by using the configuration or resource of the first user. For S904 to S906, refer to related descriptions in the foregoing embodiments. Details are not described herein again.

S907: The first network device sends a reference signal used for RLM measurement to the first user. Correspondingly, the terminal device receives, through the first user, the reference signal that is used for RLM measurement and sent by the first network device.

S908: The terminal device performs RLM measurement based on the reference signal through the first user.

S909: The terminal device determines that an RLM measurement result obtained through the first user is an RLM measurement result of the second user.

S910: The first user determines, based on the RLM measurement result, whether a radio link fails.

S911: The first user outputs the RLM measurement result to the second user.

An execution sequence of S910 and S911 is not limited.

S912: The second user determines, based on the RLM measurement result output by the first user, whether the radio link fails.

When a user and a network device use beam-based transmission, a beam width may be relatively narrow, and some beams may fail to be received in a movement or rotation process of the user. Therefore, signal quality of the beam needs to be monitored, in other words, RLM measurement needs to be performed.

In this embodiment, when the first network device needs to perform RLM measurement on the first user and the second user, the first network device sends, to the first user, the reference signal used for the RLM measurement. The reference signal is used for the RLM measurement of the first user and the second user. When the first user and the second user share the same terminal device, the first user performs the RLM measurement, and the second user does not perform the RLM measurement. Therefore, the terminal device receives, through the first user, the reference signal that is used for the RLM measurement and sent by the first network device. The terminal device performs RLM measurement based on the reference signal through the first user, to obtain an RLM measurement result. Further, the terminal device determines that the RLM measurement result obtained by the first user is an RLM measurement result of the second user. If the first user determines, based on the RLM measurement result, that a radio link between the first user and the first network device fails, the first user may trigger radio link recovery according to a procedure in the conventional technology. How to implement radio link recovery between the first user and the first network device is similar to that in the conventional technology. This is not described in detail in some embodiments of this application. In addition, the first user outputs the RLM measurement result to the second user, and the second user determines, based on the RLM measurement result, that a radio link between the second user and the first network device fails. In this case, the second user may trigger radio link recovery according to a procedure in the conventional technology. How to implement radio link recovery between the second user and the first network device is similar to that in the conventional technology. This is not described in detail in some embodiments of this application. Alternatively, the first user performs a radio link recovery operation, and the second user may not perform a radio link recovery operation. After the first user completes the radio link recovery operation, the first network device considers that the first user and the second user use a same beam for communication. That is, the terminal device performs, through the first user, the radio link recovery operation for the first user and the second user, to restore a link between the two users.

In the communications method provided in this embodiment, because the second user can perform the RLM measurement by using the configuration or resource of the first user, when the first network device needs to perform the RLM measurement on the first user and the second user, the first user performs the RLM measurement, and the second user does not perform the RLM measurement. The second user may use the RLM measurement result obtained by the first user. This can reduce unnecessary calculation/measurement steps, thereby reducing power consumption of the terminal device. In addition, if the second user does not perform the radio link recovery operation after determining, based on the RLM measurement result output by the first user, that the radio link fails, air interface resources can be further saved.

To better schedule data transmission, a channel state is estimated, and a network side selects a proper transmission parameter based on a channel estimation result, for example, a modulation and coding scheme (modulation and coding scheme, MCS), or a precoding matrix. When the channel state is estimated, a reference signal that can be used may be a channel state information reference signal (channel state information reference signal, CSI-RS) or a sounding reference signal (sounding reference signal, SRS).

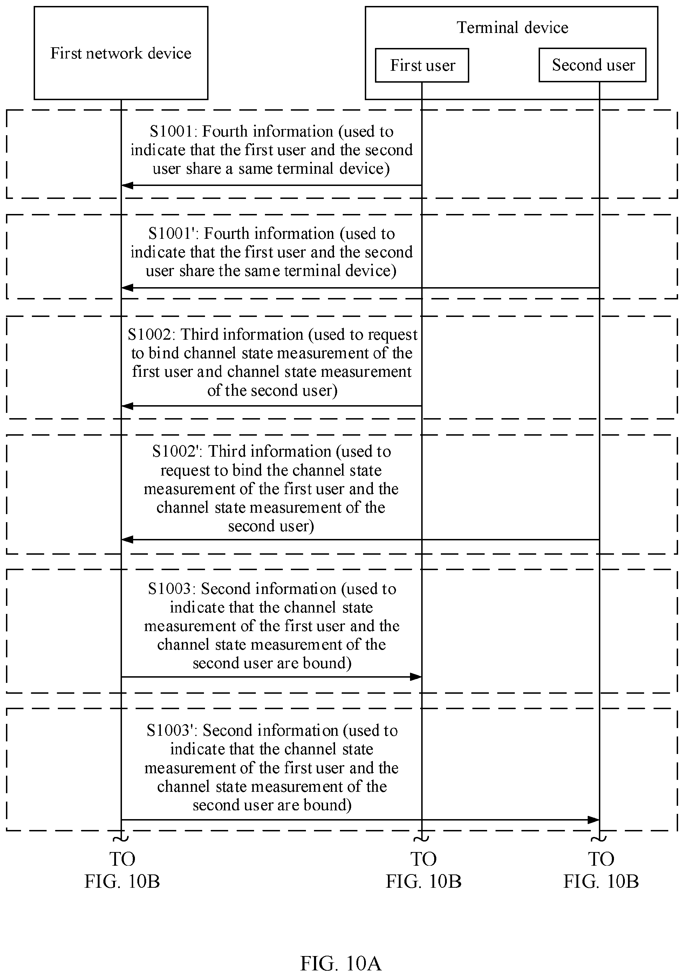

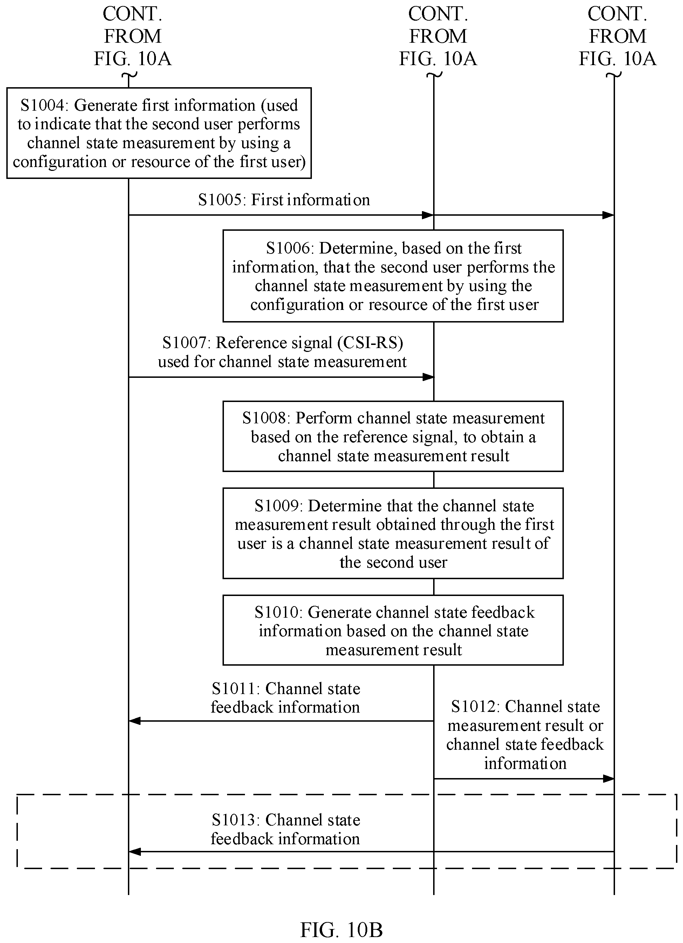

FIG. 10A and FIG. 10B are a flowchart of a communications method according to another embodiment of this application. In this embodiment, target communication behavior is channel state measurement. As shown in FIG. 10A and FIG. 10B, the method in this embodiment may include the following steps:
S1001: A terminal device sends fourth information to a first network device through a first user. Correspondingly, the first network device receives the fourth information sent by the terminal device through the first user. The fourth information is used to indicate that the first user and a second user share a same terminal device.
S1001': The terminal device sends the fourth information to the first network device through the second user. Correspondingly, the first network device receives the fourth information sent by the terminal device through the second user. The fourth information is used to indicate that the first user and a second user share a same terminal device.

It should be noted that in some embodiments of this application, at least one of S1001 and S1001' may be performed. Optionally, in some embodiments of this application, S1001 and S1001' may be performed by using a same piece of signaling, or S1001 and S1001' may be separately performed by using two pieces of signaling.

S1002: The terminal device sends third information to the first network device through the first user. Correspondingly, the first network device receives the third information sent by the terminal device through the first user. The third information is used to request to bind channel state measurement of the first user and channel state measurement of the second user.

S1002': The terminal device sends the third information to the first network device through the second user. Correspondingly, the first network device receives the third information sent by the terminal device through the second user. The third information is used to request to bind channel state measurement of the first user and channel state measurement of the second user.

It should be noted that in some embodiments of this application, at least one of S1002 and S1002' may be performed. Optionally, in some embodiments of this application, S1002 and S1002' may be performed by using a same piece of signaling, or S1002 and S1002' may be separately performed by using two pieces of signaling.

S1003: The first network device sends second information to the first user. Correspondingly, the terminal device receives, through the first user, the second information sent by the first network device. The second information is used to indicate that the channel state measurement of the first user and the channel state measurement of the second user are bound.

S1003': The first network device sends the second information to the second user. Correspondingly, the terminal device receives, through the second user, the second information sent by the first network device. The second information is used to indicate that the channel state measurement of the first user and the channel state measurement of the second user are bound.

It should be noted that in some embodiments of this application, at least one of S1003 and S1003' may be performed. Optionally, in some embodiments of this application, S1003 and S1003' may be performed by using a same piece of signaling, or S1003 and S1003' may be separately performed by using two pieces of signaling.

In this embodiment, for S1001 to S1003 and S1001' to S1003', refer to related descriptions in the foregoing embodiments. Details are not described herein again.

S1004: The first network device generates first information.

S1005: The first network device sends the first information to the first user and/or the second user. Correspondingly, the terminal device receives the first information through the first user and/or the second user.

S1006: The terminal device determines, based on the first information, that the second user performs the channel state measurement by using a configuration or resource of the first user.

In this embodiment, the first information is used to indicate that the second user performs the channel state measurement by using the configuration or resource of the first user. For S1004 to S1006, refer to related descriptions in the foregoing embodiments. Details are not described herein again.

S1007: The first network device sends a reference signal used for channel state measurement to the first user. Correspondingly, the terminal device receives, through the first user, the reference signal that is used for channel state measurement and sent by the first network device.

S1008: The terminal device performs channel state measurement based on the reference signal through the first user.

S1009: The terminal device determines that a channel state measurement result obtained through the first user is a channel state measurement result of the second user.

In some embodiments, after S1009 is performed, the method may further include:
S1010: The first user generates channel state feedback information based on the channel state measurement result obtained by the terminal device through the first user.
S1011: The terminal device sends the channel state feedback information to the first network device through the first user. Correspondingly, the first terminal device receives the channel state feedback information sent by the first user.
S1012: The first user outputs the channel state measurement result or the channel state feedback information to the second user.

If the first user outputs the channel state measurement result to the second user, S1010 and S1011 are performed in no sequence. If the first user outputs the channel state feedback information to the second user, S1011 and S1012 are performed in no sequence.

In some embodiments, after S1012 is performed, the method may further include:
S1013: The second user sends the channel state feedback information to the first network device based on the channel state measurement result or the channel state feedback information output by the first user.

In this embodiment, when the first network device needs to perform channel state measurement on the first user and the second user, the first network device sends, to the first user, the reference signal used for the channel state measurement. The channel state measurement is, for example, CSI measurement. The reference signal may be a CSI-RS. When the first user and the second user share the same terminal device, the first user performs the channel state measurement, and the second user does not perform the channel state measurement. Therefore, the terminal device receives, through the first user, the CSI-RS sent by the first network device, and the terminal device performs the channel state measurement based on the CSI-RS through the first user, to obtain the channel state measurement result. Further, the terminal device determines that the channel state measurement result obtained by the first user is a channel state measurement result of the second user.

In addition, the first user and the second user may separately send the channel state feedback information to the first network device. The channel state feedback information includes the channel state measurement result, so that the first network device adjusts a transmission parameter based on the channel state measurement result in the channel state feedback information. If the first user or the second user negotiates with the first network device, the second user may receive the channel state measurement result or the channel state feedback information output by the first user, but the second user does not report the channel state feedback information to the first network device. Because the first user or the second user negotiates with the first network device, and the channel state measurement result of the second user is obtained through the first user, the first user sends the channel state feedback information to the first network device, and the first network device may consider that the second user reports the same channel state feedback information.

In the communications method provided in this embodiment, because the second user can perform the channel state measurement by using the configuration or resource of the first user, when the first network device needs to perform the channel state measurement on the first user and the second user, the first user performs the channel state measurement, and the second user does not perform the channel state measurement. The second user may use the channel state measurement result obtained by the first user. This can reduce unnecessary calculation/measurement steps, thereby reducing power consumption of the terminal device. In addition, if the first user or the second user negotiates with the first network device, the first user feeds back the channel state measurement result or the channel state feedback information to the first network device, but the second user does not need to feed back the channel state measurement result or the channel state feedback information to the first network device. This may further reduce signaling overheads and save air interface resources.

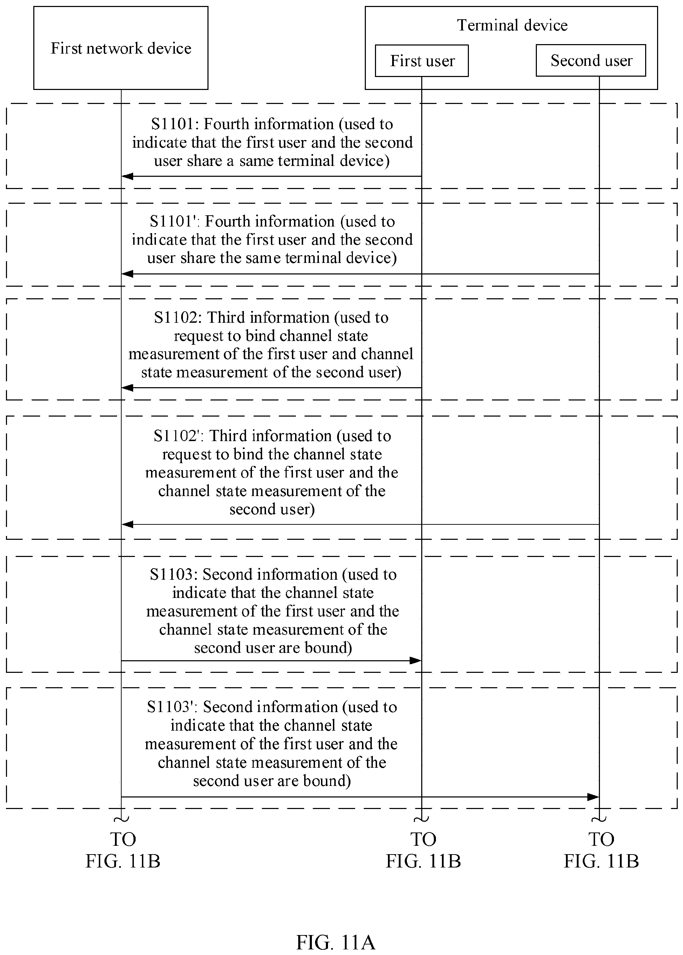

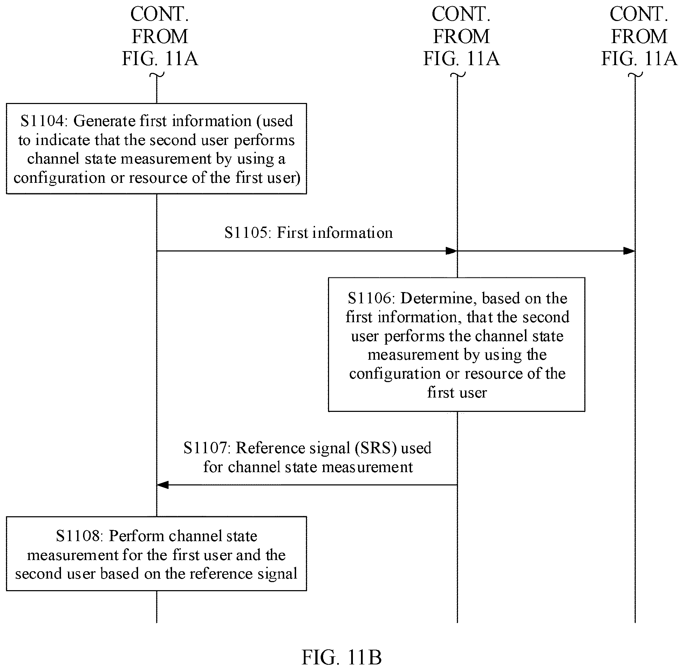

FIG. 11A and FIG. 11B are a flowchart of a communications method according to another embodiment of this application. In this embodiment, target communication behavior is channel state measurement. As shown in FIG. 11A and FIG. 11B, the method in this embodiment includes the following steps:
S1101: A terminal device sends fourth information to a first network device through a first user. Correspondingly, the first network device receives the fourth information sent by the terminal device through the first user. The fourth information is used to indicate that the first user and a second user share a same terminal device.
S1101': The terminal device sends the fourth information to the first network device through the second user. Correspondingly, the first network device receives the fourth information sent by the terminal device through the second user. The fourth information is used to indicate that the first user and the second user share a same terminal device.

It should be noted that in some embodiments of this application, at least one of S1101 and S1101' may be performed. Optionally, in some embodiments of this application, S1101 and S1101' may be performed by using a same piece of signaling, or S1101 and S1101' may be separately performed by using two pieces of signaling.

S1102: The terminal device sends third information to the first network device through the first user. Correspondingly, the first network device receives the third information sent by the terminal device through the first user. The third information is used to request to bind channel state measurement of the first user and channel state measurement of the second user.

S1102': The terminal device sends the third information to the first network device through the second user. Correspondingly, the first network device receives the third information sent by the terminal device through the second user. The third information is used to request to bind the channel state measurement of the first user and the channel state measurement of the second user.

It should be noted that in some embodiments of this application, at least one of S1102 and S1102' may be performed. Optionally, in some embodiments of this application, S1102 and S1102' may be performed by using a same piece of signaling, or S1102 and S1102' may be separately performed by using two pieces of signaling.

S1103: The first network device sends second information to the first user. Correspondingly, the terminal device receives, through the first user, the second information sent by the first network device. The second information is used to indicate that the channel state measurement of the first user and the channel state measurement of the second user are bound.

S1103': The first network device sends the second information to the second user. Correspondingly, the terminal device receives, through the second user, the second information sent by the first network device. The second information is used to indicate that the channel state measurement of the first user and the channel state measurement of the second user are bound.

It should be noted that in some embodiments of this application, at least one of S1103 and S1103' may be performed. Optionally, in some embodiments of this application, S1103 and S1103' may be performed by using a same piece of signaling, or S1103 and S1103' may be separately performed by using two pieces of signaling.

In this embodiment, for S1101 to S1103 and S1101' to S1103', refer to related descriptions in the foregoing embodiments. Details are not described herein again.

S1104: The first network device generates first information.

S1105: The first network device sends the first information to the first user and/or the second user. Correspondingly, the terminal device receives the first information through the first user and/or the second user.

S1106: The terminal device determines, based on the first information, that the second user performs the channel state measurement by using a configuration or resource of the first user.

In this embodiment, the first information is used to indicate that the second user performs the channel state measurement by using the configuration or resource of the first user. For S1104 to S1106, refer to related descriptions in the foregoing embodiments. Details are not described herein again.

S1107: The terminal device sends a reference signal used for channel state measurement to the first network device. Correspondingly, the first network device receives the reference signal that is used for channel state measurement and sent by the first user.

S1108: The first network device performs channel state measurement for the first user and the second user based on the reference signal.

In this embodiment, when the first user and the second user share the same terminal device, and the first user or the second user negotiates with the first network device, the first user sends the reference signal used for channel state measurement, where the reference signal is, for example, an SRS, and the second user does not send an SRS. When receiving the SRS sent by the first user, the first network device considers that the second user sends the same SRS. Then, the first network device performs channel state measurement on the first user and the second user based on the SRS sent by the first user, to obtain a channel state measurement result. A specific implementation in which the first network device performs channel state measurement on the first user and the second user based on the SRS may be implemented according to a procedure in the conventional technology. This is not described in detail in some embodiments of this application.

According to the communications method provided in this embodiment, because the second user can perform the channel state measurement by using the configuration or resource of the first user, when the terminal device needs to perform channel state measurement on the first user and the second user, the terminal device sends the SRS to the first network device through the first user, and the second user does not need to send the SRS. This reduces power consumption of the terminal device. In addition, because the second user does not need to send the SRS, signaling overheads can be reduced, and air interface resources can be saved.

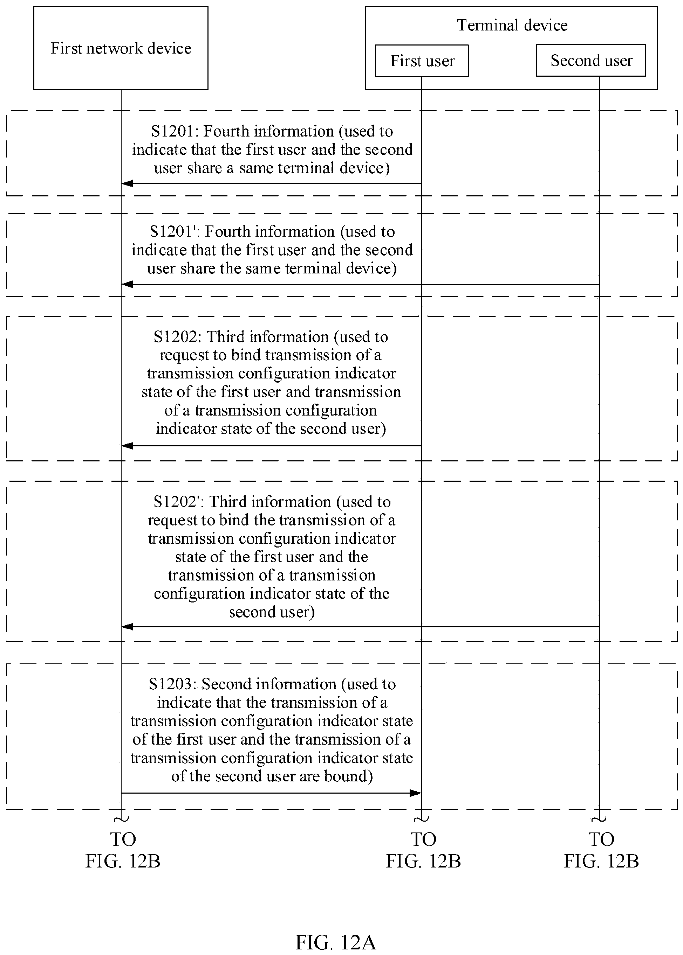

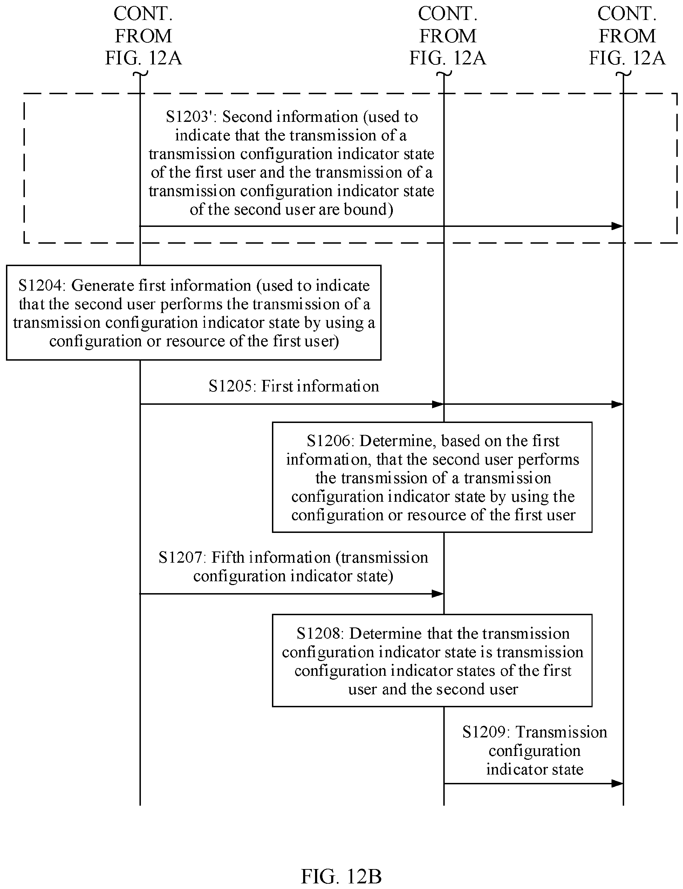

FIG. 12A and FIG. 12B are a flowchart of a communications method according to another embodiment of this application. In this embodiment, target communication behavior is transmission of a transmission configuration indicator state. As shown in FIG. 12A and FIG. 12B, the method in this embodiment may include the following steps:
S1201: A terminal device sends fourth information to a first network device through a first user. Correspondingly, the first network device receives the fourth information sent by the terminal device through the first user. The fourth information is used to indicate that the first user and a second user share a same terminal device.
S1201': The terminal device sends the fourth information to the first network device through the second user. Correspondingly, the first network device receives the fourth information sent by the terminal device through the second user. The fourth information is used to indicate that the first user and the second user share the same terminal device.

It should be noted that in some embodiments of this application, at least one of S1201 and S1201' may be performed. Optionally, in some embodiments of this application, S1201 and S1201' may be performed by using a same piece of signaling, or S 1201 and S1201' may be separately performed by using two pieces of signaling.

S1202: The terminal device sends third information to the first network device through the first user. Correspondingly, the first network device receives the third information sent by the terminal device through the first user. The third information is used to request to bind transmission of a transmission configuration indicator state of the first user and transmission of a transmission configuration indicator state of the second user.

S1202': The terminal device sends the third information to the first network device through the second user. Correspondingly, the first network device receives the third information sent by the terminal device through the second user. The third information is used to request to bind the transmission of a transmission configuration indicator state of the first user and the transmission of a transmission configuration indicator state of the second user.

A transmission configuration indicator state (transmission configuration indicator state, TCI state) is used to indicate quasi-colocation (quasi-colocation, QCL) information of a signal. If a channel characteristic of a signal transmitted by one antenna port can be inferred from a channel characteristic of a signal transmitted by another antenna port, two antenna ports are called quasi-colocated.

It should be noted that in some embodiments of this application, at least one of S1202 and S1202' may be performed. Optionally, in some embodiments of this application, S1202 and S1202' may be performed by using a same piece of signaling, or S1202 and S1202' may be separately performed by using two pieces of signaling.

S1203: The first network device sends second information to the first user. Correspondingly, the terminal device receives, through the first user, the second information sent by the first network device. The second information is used to indicate that the transmission of a transmission configuration indicator state of the first user and the transmission of a transmission configuration indicator state of the second user are bound.

S1203': The first network device sends the second information to the second user. Correspondingly, the terminal device receives, through the second user, the second information sent by the first network device. The second information is used to indicate that the transmission of a transmission configuration indicator state of the first user and the transmission of a transmission configuration indicator state of the second user are bound.

It should be noted that in some embodiments of this application, at least one of S1203 and S1203' may be performed. Optionally, in some embodiments of this application, S1203 and S1203' may be performed by using a same piece of signaling, or S1203 and S1203' may be separately performed by using two pieces of signaling.

In this embodiment, for S1201 to S1203 and S1201' to S1203', refer to related descriptions in the foregoing embodiments. Details are not described herein again.

S1204: The first network device generates first information.

S1205: The first network device sends the first information to the first user and/or the second user. Correspondingly, the terminal device receives the first information through the first user and/or the second user.

S1206: The terminal device determines, based on the first information, that the second user performs the transmission of a transmission configuration indicator state by using a configuration or resource of the first user.

In this embodiment, the first information is used to indicate that the second user performs the transmission of a transmission configuration indicator state by using the configuration or resource of the first user. For S1204 to S1206, refer to related descriptions in the foregoing embodiments. Details are not described herein again.

S1207: The first network device sends fifth information to the first user. Correspondingly, the terminal device receives, through the first user, the fifth information sent by the first network device.

S1208: The first user determines that a transmission configuration indicator state included in the fifth information is transmission configuration indicator states of the first user and the second user.

S1209: The first user outputs the transmission configuration indicator state to the second user.

In this embodiment, when the first user and the second user share the same terminal device, both the first user and the second user are in a connected mode, and the first user and the second user access a same network device (namely, the first network device). When the first network device configures or indicates the transmission configuration indicator state for the first user and the second user, the first network device sends the fifth information to the first user. The fifth information includes the transmission configuration indicator state, and the transmission configuration indicator state is transmission configuration indicator states of the first user and the second user. Correspondingly, the terminal device receives, through the first user, the fifth information sent by the first network device, and determines that the transmission configuration indicator state included in the fifth information is the transmission configuration indicator states of the first user and the second user. Then, the first user outputs the transmission configuration indicator state to the second user.

According to the communications method provided in this embodiment, because the second user can use the configuration or resource of the first user to perform transmission of the transmission configuration indicator state, when the first network device configures or indicates the transmission configuration indicator state for the first user and the second user, the first network device sends, to the first user, a fifth message including the transmission configuration indicator state. The second user uses the transmission configuration indicator state received by the first user. Because the second user does not need to interact with the first network device, power consumption of the terminal device is reduced. Because the first network device does not need to send the transmission configuration indicator state to the second user, power consumption of the first network device is reduced. In addition, the first network device does not need to send the transmission configuration indicator state to the second user. This can reduce signaling overheads, and save air interface resources.

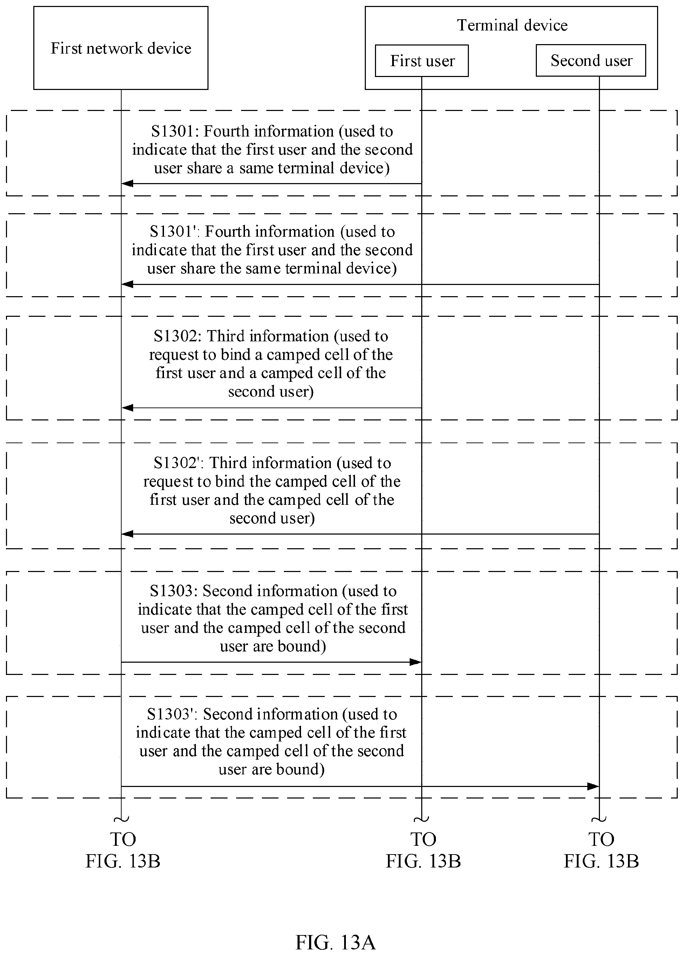

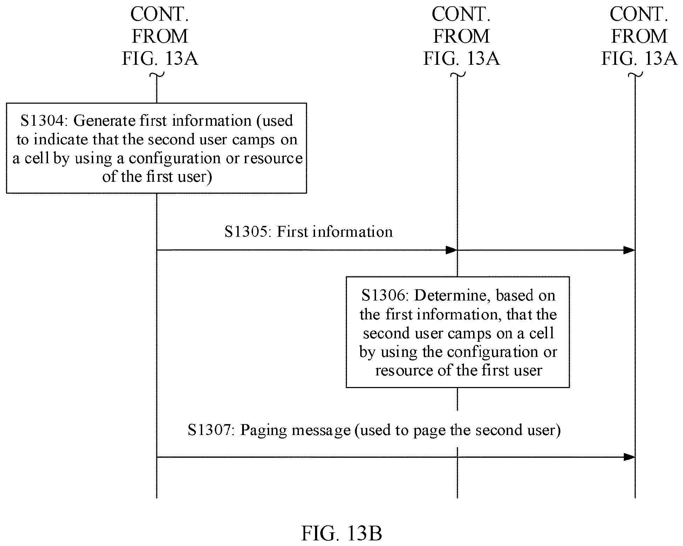

FIG. 13A and FIG. 13B are a flowchart of a communications method according to another embodiment of this application. In this embodiment, target communication behavior is camping on a cell. As shown in FIG. 13A and FIG. 13B, the method in this embodiment may include the following steps:
S1301: A terminal device sends fourth information to a first network device through a first user. Correspondingly, the first network device receives the fourth information sent by the terminal device through the first user. The fourth information is used to indicate that the first user and a second user share a same terminal device.
S1301': The terminal device sends the fourth information to the first network device through the second user. Correspondingly, the first network device receives the fourth information sent by the terminal device through the second user. The fourth information is used to indicate that the first user and the second user share the same terminal device.

It should be noted that in some embodiments of this application, at least one of S1301 and S1301' may be performed. Optionally, in some embodiments of this application, S1301 and S1301' may be performed by using a same piece of signaling, or S1301 and S1301' may be separately performed by using two pieces of signaling.

S1302: The terminal device sends third information to the first network device through the first user. Correspondingly, the first network device receives the third information sent by the terminal device through the first user. The third information is used to request to bind a camped cell of the first user and a camped cell of the second user.

S1302': The terminal device sends the third information to the first network device through the second user. Correspondingly, the first network device receives the third information sent by the terminal device through the second user. The third information is used to request to bind the camped cell of the first user and the camped cell of the second user.

It should be noted that in some embodiments of this application, at least one of S1302 and S1302' may be performed. Optionally, in some embodiments of this application, S1302 and S1302' may be performed by using a same piece of signaling, or S1302 and S1302' may be separately performed by using two pieces of signaling.

S1303: The first network device sends second information to the first user. Correspondingly, the terminal device receives, through the first user, the second information sent by the first network device. The second information is used to indicate that the camped cell of the first user and the camped cell of the second user are bound.

S1303': The first network device sends the second information to the second user. Correspondingly, the terminal device receives, through the second user, the second information sent by the first network device. The second information is used to indicate that the camped cell of the first user and the camped cell of the second user are bound.

It should be noted that in some embodiments of this application, at least one of S1303 and S1303' may be performed. Optionally, in some embodiments of this application, S1303 and S1303' may be performed by using a same piece of signaling, or S1303 and S1303' may be separately performed by using two pieces of signaling.

In this embodiment, for S1301 to S1303 and S1301' to S1303', refer to related descriptions in the foregoing embodiments. Details are not described herein again.

S1304: The first network device generates first information.

S1305: The first network device sends the first information to the first user and/or the second user. Correspondingly, the terminal device receives the first information through the first user and/or the second user.

S1306: The terminal device determines, based on the first information, that the second user camps on a cell by using a configuration or resource of the first user.

In this embodiment, the first information is used to indicate that the second user camps on a cell by using the configuration or resource of the first user. For S1304 to S1306, refer to related descriptions in the foregoing embodiments. Details are not described herein again.

S1307: The first network device sends a paging message to the second user by using a cell accessed by the first user. Correspondingly, the terminal device receives, by using the cell accessed by the first user, the paging message sent by the first network device.

In this embodiment, the first user and the second user share the same terminal device, the first user is in a connected mode, the second user is in an idle mode, and the first network device can determine the cell accessed by the first user. Because the second user camps on the cell accessed by the first user, the first network device can determine that a cell on which the second user camps is the cell accessed by the first user. When the first network device needs to page the second user, the first network device may send a paging message to the second user by using the cell accessed by the first user. The paging message is used to page the second user. Correspondingly, the second user receives the paging message sent by the first network device, and determines that the second user is paged. The second user may respond to the paging message by using a procedure in the conventional technology.

According to the communications method provided in this embodiment, the second user can answer the paging by using the configuration or resource of the first user, when the first network device needs to page the second user, because the second user camps on the cell accessed by the first user, the first network device sends the paging message to the second user by using the cell accessed by the first user. This can reduce signaling overheads and save air interface resources.

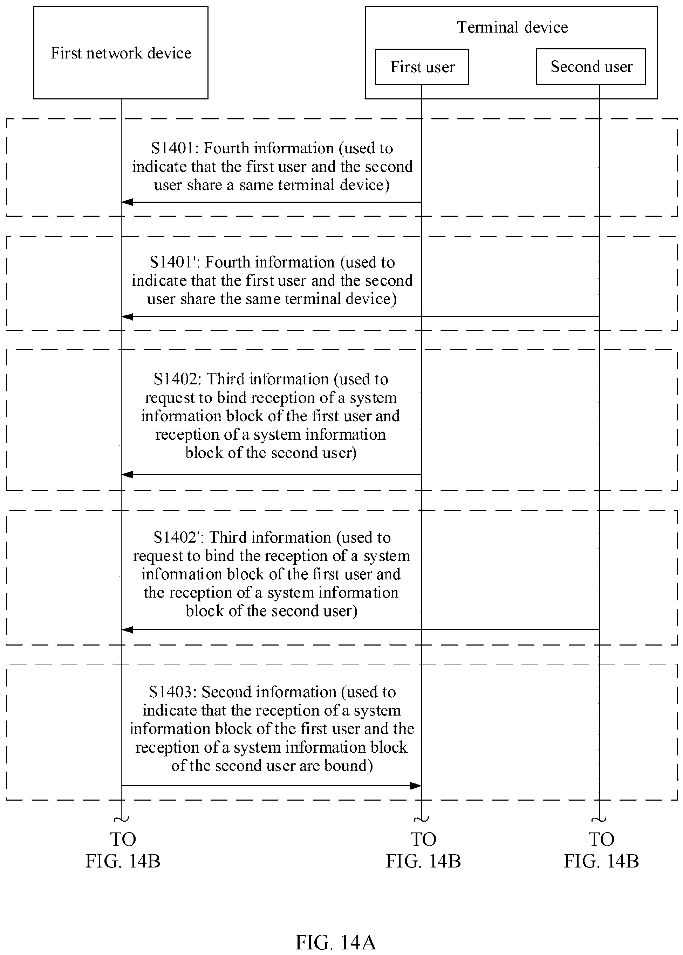

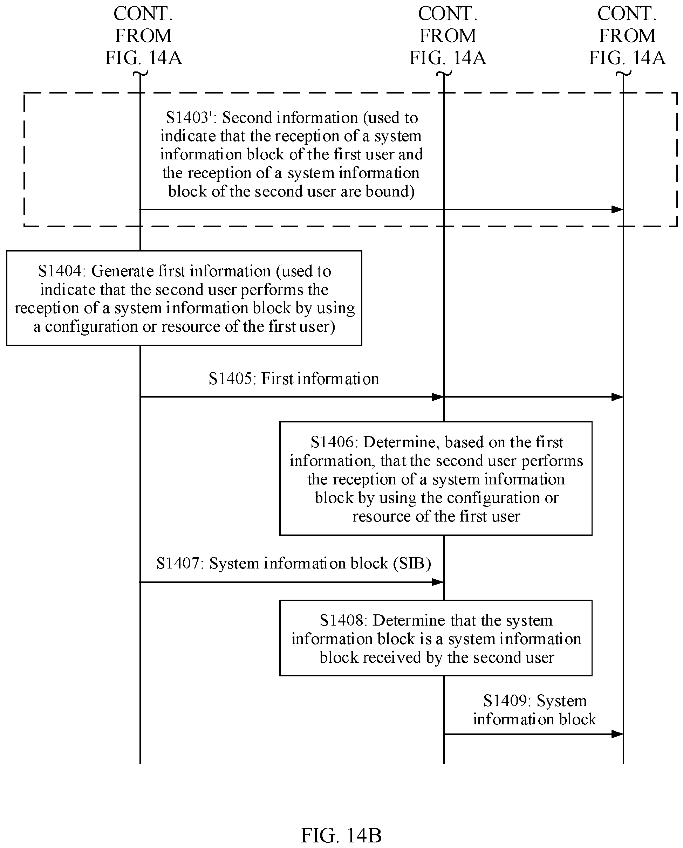

FIG. 14A and FIG. 14B are a flowchart of a communications method according to another embodiment of this application. In this embodiment, target communication behavior is reception of a system information block. As shown in FIG. 14A and FIG. 14B, the method in this embodiment may include the following steps:
S1401: A terminal device sends fourth information to a first network device through a first user. Correspondingly, the first network device receives the fourth information sent by the terminal device through the first user. The fourth information is used to indicate that the first user and a second user share a same terminal device.
S1401': The terminal device sends the fourth information to the first network device through the second user. Correspondingly, the first network device receives the fourth information sent by the terminal device through the second user. The fourth information is used to indicate that the first user and the second user share the same terminal device.

It should be noted that in some embodiments of this application, at least one of S1401 and S1401' may be performed. Optionally, in some embodiments of this application, S1401 and S1401' may be performed by using a same piece of signaling, or S1401 and S1401' may be separately performed by using two pieces of signaling.

S1402: The terminal device sends third information to the first network device through the first user. Correspondingly, the first network device receives the third information sent by the terminal device through the first user. The third information is used to request to bind reception of a system information block of the first user and reception of a system information block of the second user.

S1402': The terminal device sends the third information to the first network device through the second user. Correspondingly, the first network device receives the third information sent by the terminal device through the second user. The third information is used to request to bind the reception of a system information block of the first user and the reception of a system information block of the second user.

It should be noted that in some embodiments of this application, at least one of S1402 and S1402' may be performed. Optionally, in some embodiments of this application, S1402 and S1402' may be performed by using a same piece of signaling, or S1402 and S1402' may be separately performed by using two pieces of signaling.

S1403: The first network device sends second information to the first user. Correspondingly, the terminal device receives, through the first user, the second information sent by the first network device. The second information is used to indicate that the reception of a system information block of the first user and the reception of a system information block of the second user are bound.

S1403': The first network device sends the second information to the second user. Correspondingly, the terminal device receives, through the second user, the second information sent by the first network device. The second information is used to indicate that the reception of a system information block of the first user and the reception of a system information block of the second user are bound.

It should be noted that in some embodiments of this application, at least one of S1403 and S1403' may be performed. Optionally, in some embodiments of this application, S1403 and S1403' may be performed by using a same piece of signaling, or S1403 and S1403' may be separately performed by using two pieces of signaling.

In this embodiment, for S1401 to S1403 and S1401' to S1403', refer to related descriptions in the foregoing embodiments. Details are not described herein again.

S1404: The first network device generates first information.

S1405: The first network device sends the first information to the first user and/or the second user. Correspondingly, the terminal device receives the first information through the first user and/or the second user.

S1406: The terminal device determines, based on the first information, that the second user performs the reception of a system information block by using a configuration or resource of the first user.

In this embodiment, the first information is used to indicate that the second user performs the reception of a system information block by using the configuration or resource of the first user. For S1404 to S1406, refer to related descriptions in the foregoing embodiments. Details are not described herein again.

In some embodiments, S1401 to S1403, S1401' to S1403', and S1404 to S1406 may not be performed.

S1407: The terminal device receives, through the first user, a system information block sent by the first network device. Correspondingly, the first network device sends the system information block to the first user.

S1408: The terminal device determines that the system information block is a system information block received by the second user.

S1409: The first user outputs the received system information block to the second user.

In this embodiment, when the first user and the second user share the same terminal device, and the first user and the second user access a same cell, the first user receives the system information block, and the second user does not receive the system information block. The first network device sends the system information block, and the terminal device receives, through the first user, the system information block sent by the first network device. If the terminal device determines that the received system information block is the system information block received by the second user, the first user outputs the received system information block to the second user.

According to the communications method provided in this embodiment, because the second user can receive the system information block by using the configuration or resource of the first user, when the first network device sends the system information block, the second user may not need to receive the system information block, thereby reducing power consumption of the terminal device.

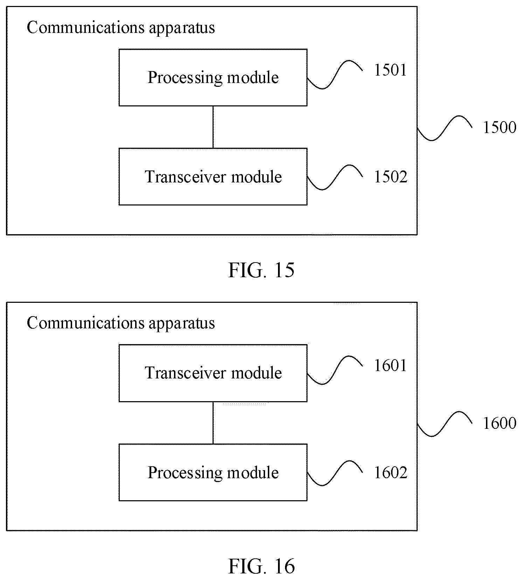

FIG. 15 is a schematic diagram of a structure of a communications apparatus according to an embodiment of this application. The communications apparatus may be a first network device, or may be a component (for example, an integrated circuit or a chip) of the first network device, or may be another communications module, configured to implement an operation corresponding to the first network device in the corresponding method embodiment. As shown in FIG. 15, the communications apparatus in this embodiment may include a processing module 1501 and a transceiver module 1502.

The processing module 1501 is configured to generate first information. The first information is used to indicate that a second user performs target communication behavior by using a configuration or resource of a first user, and the first network device is a network device that the first user accesses or camps on.

The transceiver module 1502 is configured to send the first information to the first user and/or the second user.

In some embodiments, the first user and the second user share a same terminal device.

In some embodiments, PLMNs of the first network device and a second network device are the same, and the second network device is a network device that the second user accesses or camps on.

In some embodiments, the transceiver module 1502 is further configured to: before sending the first information, send second information to the first user and/or the second user. The second information is used to indicate that target communication behavior of the first user and the target communication behavior of the second user are bound.

In some embodiments, the transceiver module 1502 is further configured to: before sending the second information, receive third information sent by the first user and/or the second user. The third information is used to request to bind the target communication behavior of the first user and the target communication behavior of the second user.

In some embodiments, the transceiver module 1502 is further configured to: before receiving the third information, receive fourth information sent by the first user and/or the second user. The fourth information is used to indicate that the first user and the second user share the same terminal device, and the fourth information includes identification information of the first user and/or the second user.

In some embodiments, the first user is a first user identity card, and the second user is a second user identity card.

In some embodiments, the first user identity card is a primary user identity card on the terminal device.

In some embodiments, the target communication behavior includes one or more of the following: behavior of receiving paging, RRM measurement, RLM measurement, channel state measurement, transmission of a transmission configuration indicator state, camping on a cell, and reception of a system information block.

In some embodiments, the transceiver module 1502 is further configured to perform the target communication behavior of the first user and the target communication behavior of the second user based on the configuration or resource of the first user.

In some embodiments, if the target communication behavior is the behavior of receiving paging, the transceiver module 1502 is specifically configured to send a paging message to the first user. The paging message is used to page the first user and the second user.

In some embodiments, if the target communication behavior is the RRM measurement, the transceiver module 1502 is specifically configured to send a reference signal used for the RRM measurement to the first user. The reference signal is used for RRM measurement of the first user and the second user.

In some embodiments, the transceiver module 1502 is further configured to: receive an RRM measurement result of the first user, and send a handover command to a terminal based on the RRM measurement result. The handover command is used to indicate cell handover of the first user and the second user.

In some embodiments, if the target communication behavior is the RLM measurement, the transceiver module 1502 is specifically configured to send a reference signal used for the RLM measurement to the first user. The reference signal is used for RLM measurement of the first user and the second user.

In some embodiments, if the target communication behavior is the channel state measurement, the transceiver module 1502 is specifically configured to send a reference signal used for the channel state measurement to the first user. The reference signal is used for channel state measurement of the first user and the second user.

In some embodiments, the transceiver module 1502 is further configured to receive channel state feedback information sent by the first user. The channel state feedback information includes a channel state measurement result.

The processing module 1501 is further configured to determine that the channel state measurement result is channel state measurement results of the first user and the second user.

In some embodiments, if the target communication behavior is the channel state measurement, the transceiver module 1502 is specifically configured to receive a reference signal that is sent by the first user and used for channel state measurement.

The processing module 1501 is specifically configured to perform channel state measurement for the first user and the second user based on the reference signal.

In some embodiments, if the target communication behavior is the transmission of a transmission configuration indicator state, the transceiver module 1502 is specifically configured to send fifth information to the first user. The fifth information includes a transmission configuration indicator state, and the transmission configuration indicator state is transmission configuration indicator states of the first user and the second user.

In some embodiments, if the target communication behavior is camping on a cell, the transceiver module 1502 is specifically configured to send a paging message to the second user by using a cell accessed by the first user. The paging message is used to page the second user.

The communications apparatus in this embodiment may be configured to perform the technical solutions performed by the first network device in the corresponding method embodiments. Implementation principles and technical effects of the communications apparatus are similar to those in the method embodiments. For functions of the modules, refer to corresponding descriptions in the method embodiments. Details are not described herein again.

FIG. 16 is a schematic diagram of a structure of a communications apparatus according to another embodiment of this application. The communications apparatus may be a terminal device, or may be a component (for example, an integrated circuit or a chip) of the terminal device, or may be another communications module, configured to implement an operation corresponding to the terminal device in the corresponding method embodiment. As shown in FIG. 16, the communications apparatus in this embodiment may include a transceiver module 1601 and a processing module 1602.

The transceiver module 1601 is configured to receive, through a first user and/or a second user, first information sent by a first network device. The first information is used to indicate that the second user performs target communication behavior by using a configuration or resource of the first user, and the first network device is a network device that the first user accesses or camps on.

The processing module 1602 is configured to determine, based on the first information, that the second user performs the target communication behavior by using the configuration or resource of the first user.

In some embodiments, the first user and the second user share a same terminal device.

In some embodiments, PLMNs of the first network device and a second network device are the same, and the second network device is a network device that the second user accesses or camps on.

In some embodiments, the transceiver module 1601 is further configured to: before receiving the first information, receive, through the first user and/or the second user, second information sent by the first network device. The second information is used to indicate that target communication behavior of the first user and the target communication behavior of the second user are bound.

In some embodiments, the transceiver module 1601 is further configured to: before sending the second information, send third information to the first network device through the first user and/or the second user. The third information is used to request to bind the target communication behavior of the first user and the target communication behavior of the second user.

In some embodiments, the transceiver module 1601 is further configured to: before sending the third information, send fourth information to the first network device through the first user and/or the second user. The fourth information is used to indicate that the first user and the second user share the terminal device, and the fourth information includes identification information of the first user and/or the second user.

In some embodiments, the first user is a first user identity card, and the second user is a second user identity card.

In some embodiments, the first user identity card is a primary user identity card on the terminal device.

In some embodiments, the target communication behavior includes one or more of the following: behavior of receiving paging, RRM measurement, RLM measurement, channel state measurement, transmission of a transmission configuration indicator state, camping on a cell, and reception of a system information block.

In some embodiments, the processing module 1602 is further configured to perform the target communication behavior of the first user and the target communication behavior of the second user based on the configuration or resource of the first user.

In some embodiments, if the target communication behavior is the behavior of receiving paging, the transceiver module 1601 is further configured to receive, through the first user, a paging message sent by the first network device. The paging message is used to page the first user and the second user. The processing module 1602 is specifically configured to determine that the paging message is used to page the first user and the second user.

In some embodiments, if the target communication behavior is the RRM measurement, the transceiver module 1601 is further configured to receive, through the first user, a reference signal that is used for RRM measurement and sent by the first network device.

The processing module 1602 is specifically configured to: perform RRM measurement based on the reference signal through the first user, and determine that an RRM measurement result obtained through the first user is an RRM measurement result of the second user.

In some embodiments, the transceiver module 1601 is further configured to receive, through the first user, a handover command sent by the first network device based on the RRM measurement result.

The processing module 1602 is further configured to perform cell handover on the first user and the second user based on the handover command.

In some embodiments, the processing module 1602 is further configured to perform cell reselection on the first user and the second user based on the RRM measurement result.

In some embodiments, if the target communication behavior is the RLM measurement, the transceiver module 1601 is further configured to receive, through the first user, a reference signal that is used for RLM measurement and sent by the first network device.

The processing module 1602 is specifically configured to: perform RLM measurement based on the reference signal through the first user, and determine that an RLM measurement result obtained through the first user is an RLM measurement result of the second user.

In some embodiments, if the target communication behavior is the channel state measurement, the transceiver module 1601 is further configured to receive, through the first user, a reference signal that is used for channel state measurement and sent by the first network device.

The processing module 1602 is specifically configured to: perform channel state measurement based on the reference signal through the first user, and determine that a channel state measurement result obtained through the first user is a channel state measurement result of the second user.

In some embodiments, the transceiver module 1601 is further configured to send channel state feedback information to the first network device through the first user. The channel state feedback information includes a channel state measurement result.

In some embodiments, if the target communication behavior is the channel state measurement, the transceiver module 1601 is further configured to send, to the first network device through the first user, a reference signal used for channel state measurement for the first user and the second user.

In some embodiments, if the target communication behavior is the transmission of a transmission configuration indicator state, the transceiver module 1601 is further configured to receive, through the first user, fifth information sent by the first network device. The fifth information includes a transmission configuration indicator state.

The processing module 1602 is specifically configured to determine that the transmission configuration indicator state is transmission configuration indicator states of the first user and the second user.

In some embodiments, if the target communication behavior is camping on a cell, the transceiver module 1601 is further configured to receive, by using a cell accessed by the first user, a paging message sent by the first network device. The paging message is used to page the second user. The processing module 1602 is specifically configured to determine that the paging message is used to page the second user.

In some embodiments, if the target communication behavior is the reception of a system information block, the transceiver module 1601 is specifically configured to: receive, through the first user, a system information block sent by the first network device, and determine that the system information block is a system information block received by the second user.

The communications apparatus in this embodiment may be configured to perform the technical solutions performed by the terminal device in the corresponding method embodiments. Implementation principles and technical effects of the communications apparatus are similar to those in the method embodiments. For functions of the modules, refer to corresponding descriptions in the method embodiments. Details are not described herein again.

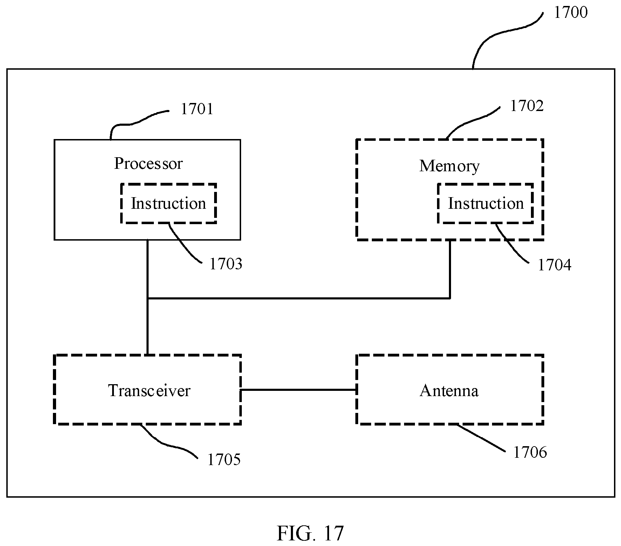

FIG. 17 is a schematic diagram of a structure of a communications apparatus according to another embodiment of this application. As shown in FIG. 17, the communications apparatus 1700 in this embodiment may be the terminal device (or a component that can be used in the terminal device) or the first network device (or a component that can be used in the first network device) mentioned in the foregoing method embodiments. The communications apparatus may be configured to implement the method that is corresponding to the terminal device or the first network device and that is described in the foregoing method embodiments. For details, refer to the descriptions in the foregoing method embodiments.

The communications apparatus 1700 may include one or more processors 1701. The processor 1701 may also be referred to as a processing unit, and may implement a specific control or processing function. The processor 1701 may be a general-purpose processor, a dedicated processor, or the like. For example, the processor may be a baseband processor or a central processing unit. The baseband processor may be configured to process a communication protocol and communication data. The central processing unit may be configured to: control the communications apparatus, execute a software program, and process data of the software program.

In an optional design, the processor 1701 may also store an instruction 1703 or data (for example, intermediate data). The instruction 1703 may be run by the processor, so that the communications apparatus 1700 performs the method that is corresponding to the terminal device or the first network device and that is described in the foregoing method embodiments.

In another possible design, the communications apparatus 1700 may include a circuit. The circuit may implement a sending, receiving, or communication function in the foregoing method embodiments.

Optionally, the communications apparatus 1700 may include one or more memories 1702. The memory 1102 may store an instruction 1704, and the instruction may be run on the processor, so that the communications apparatus 1700 performs the method described in the foregoing method embodiments.

Optionally, the memory may also store data. The processor and the memory may be separately disposed, or may be integrated together.

Optionally, the communications apparatus 1700 may further include a transceiver 1705 and/or an antenna 1706. The processor 1701 may be referred to as a processing unit, and controls the communications apparatus (the terminal device or the first network device). The transceiver 1705 may be referred to as a transceiver unit, a transceiver machine, a transceiver circuit, a transceiver, or the like, and is configured to implement a transceiver function of the communications apparatus.

In a design, the communications apparatus is configured to implement an operation corresponding to the first network device in the foregoing embodiments.

For example, the processor 1701 may generate first information. The first information is used to indicate that a second user performs target communication behavior by using a configuration or resource of a first user, and the first network device is a network device that the first user accesses or camps on. The transceiver 1705 sends the first information to the first user and/or the second user.

For specific implementation processes of the processor 1701 and the transceiver 1705, refer to the related descriptions in the foregoing embodiments. Details are not described herein again.

In another design, the communications apparatus 1700 is configured to implement an operation corresponding to the terminal device in the foregoing embodiments. For example, the transceiver 1705 may receive, through the first user and/or the second user, the first information sent by the first network device. The first information is used to indicate that the second user performs the target communication behavior by using the configuration or resource of the first user, and the first network device is the network device that the first user accesses or camps on. The processor 1701 determines, based on the first information, that the second user performs the target communication behavior by using the configuration or resource of the first user.

For specific implementation processes of the processor 1701 and the transceiver 1705, refer to the related descriptions in the foregoing embodiments. Details are not described herein again.

The processor 1701 and the transceiver 1705 described in this application may be implemented on an integrated circuit (integrated circuit, IC), an analog IC, a radio frequency integrated circuit (radio frequency integrated circuit, RFIC), a hybrid signal IC, an application-specific integrated circuit (application-specific integrated circuit, ASIC), a printed circuit board (printed circuit board, PCB), an electronic device, or the like. The processor and the transceiver may also be manufactured by using various 1C technologies, for example, a complementary metal oxide semiconductor (complementary metal oxide semiconductor, CMOS), an N-type metal oxide semiconductor (nMetal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

Although the communications apparatus 1700 is described by using the terminal device or the first network device as an example in the foregoing embodiment descriptions, a scope of the communications apparatus described in this application is not limited to the foregoing terminal device or first network device, and a structure of the communications apparatus may not be limited by FIG. 17. The communications apparatus 1700 may be an independent device or may be a part of a relatively large device. For example, the device may be:
(1) an independent integrated circuit IC, a chip, or a chip system or subsystem;
(2) a set of one or more ICs, where optionally, the IC set may also include a storage component configured to store data and/or an instruction;
(3) an ASIC, for example, a modem (MSM);
(4) a module that can be embedded in another device;
(5) a receiver, a wireless device, a mobile unit, a network device, and the like; or
(6) others, or the like.

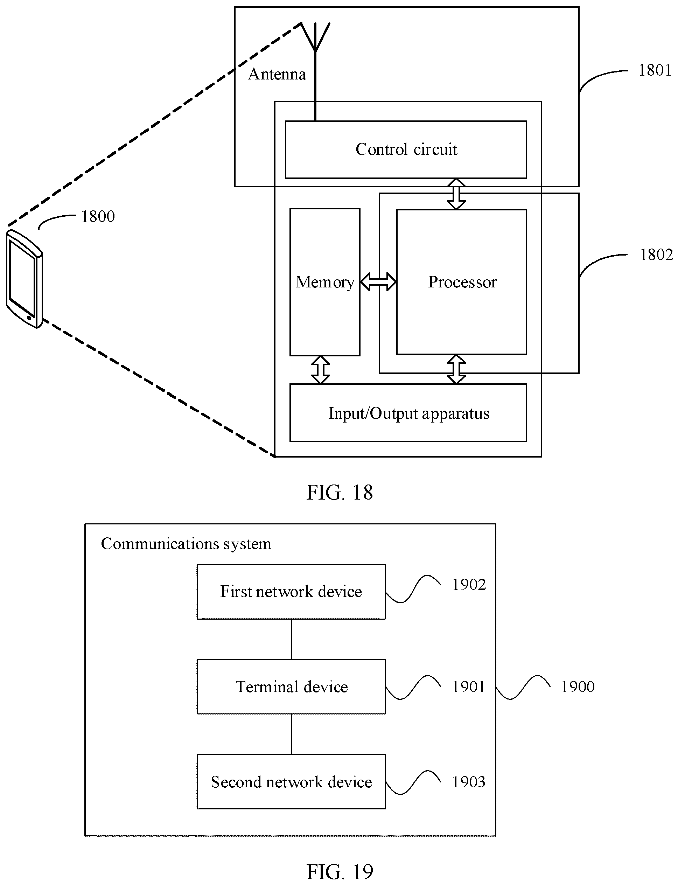

FIG. 18 is a schematic diagram of a structure of a terminal device according to an embodiment of this application. The terminal device is applicable to the terminal device described in the foregoing embodiments of this application. For ease of description, FIG. 18 shows only main components of the terminal device. As shown in FIG. 18, the terminal device 1800 includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, or a keyboard, is mainly configured to: receive data input by a user and output data to the user.

After the terminal device is powered on, the processor may read a software program in a storage unit, explain and execute instructions of the software program, and process data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the terminal, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 18 shows only one memory and one processor. An actual terminal may include a plurality of processors and a plurality of memories. The memory may also be referred to as a storage medium, a storage device, or the like. This is not limited in some embodiments of this application.

In an optional implementation, the processor may include a baseband processor and a central processing unit. The baseband processor is mainly configured to process a communication protocol and communication data, and the central processing unit is mainly configured to: control the entire terminal, execute a software program, and process data of the software program. The processor in FIG. 18 integrates functions of the baseband processor and the central processing unit. A person skilled in the art may understand that the baseband processor and the central processing unit may alternatively be independent processors, and interconnected by using a technology such as a bus. A person skilled in the art may understand that the terminal device may include a plurality of baseband processors to adapt to different network standards, the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program. The processor executes the software program to implement a baseband processing function.

In an example, the antenna having a transceiver function and the control circuit may be considered as a transceiver module 1801 of the terminal device 1800, and the processor having a processing function may be considered as a processing module 1802 of the terminal device 1800. As shown in FIG. 18, the terminal device 1800 includes the transceiver module 1801 and the processing module 1802. The transceiver module may also be referred to as a transceiver, a transceiver machine, a transceiver apparatus, or the like. Optionally, a component that is configured to implement a receiving function and that is in the transceiver module 1801 may be considered as a receiving module, and a component that is configured to implement a sending function and that is in the transceiver module 1801 may be considered as a sending module. That is, the transceiver module 1801 includes the receiving module and the sending module. For example, the receiving module may also be referred to as a receiver, a receiver machine, a receiver circuit, or the like, and the sending module may be referred to as a transmitter, a transmitter machine, a transmitter circuit, or the like.

FIG. 19 is a schematic diagram of a structure of a communications system according to an embodiment of this application. As shown in FIG. 19, the communications system 1900 in this embodiment may include a terminal device 1901, a first network device 1902, and a second network device 1903. In some cases, the first network device 1902 and the second network device 1903 are a same network device. There may be one or more terminal devices 1901. The terminal device 1901 may use the structure in the apparatus embodiment shown in FIG. 16, FIG. 17, or FIG. 18, and may correspondingly perform the technical solution related to the terminal device in any one of the foregoing method embodiments. Implementation principles and technical effects thereof are similar, and details are not described herein again. The first network device 1902 may use the structure in the apparatus embodiment shown in FIG. 15 or FIG. 17, and may correspondingly perform the technical solutions related to the first network device in any one of the foregoing method embodiments. Implementation principles and technical effects thereof are similar, and details are not described herein again.

It should be noted that, in the embodiments of this application, module division is an example, and is merely a logical function division. In actual implementation, another division manner may be used. Function modules in the embodiments of this application may be integrated into one processing module, or each of the modules may exist alone physically, or two or more modules are integrated into one module. The integrated module may be implemented in a form of hardware, or may be implemented in a form of a software function module.

When the integrated module is implemented in the form of a software function module and sold or used as an independent product, the integrated module may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

All or some of the foregoing embodiments may be implemented by using software, hardware, firmware, or any combination thereof. When software is used to implement the embodiments, the embodiments may be implemented all or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive Solid State Disk (SSD)), or the like.

## Claims

1. A communications method, comprising:
generating (S1104), by a first network device (1902), first information, wherein the first information is used to indicate that a second user performs channel state measurement by using a configuration or resource of a first user, and the first network device is a network device that the first user accesses or camps on;
sending (S1105), by the first network device (1902), the first information to the first user and/or the second user;
receiving (S1107), by the first network device (1902), a reference signal that is to be used for channel state measurement and sent by the first user;
performing (S1108), by the first network device (1902), channel state measurement for the first user and the second user based on the reference signal;
wherein the first user is a first user identity card, and the second user is a second user identity card; and
wherein the first user and the second user share a same terminal device (1901).

2. The method according to claim 1, wherein public land mobile networks PLMNs of the first network device (1902) and a second network device (1903) are the same, and the second network device is a network device that the second user accesses or camps on.

3. The method according to any one of claims 1 to 2, wherein the method further comprises:
before the first network device (1902) sends (S1105) the first information, sending (S1103, S1103'), by the first network device, second information to the first user and/or the second user, wherein the second information is used to indicate that a channel state measurement of the first user and the channel state measurement of the second user are bound.

4. The method according to claim 3, further comprising:
before the first network device (1902) sends (S1103, S1103') the second information, receiving (S1102, S1102'), by the first network device, third information sent by the first user and/or the second user, wherein the third information is used to request to bind the channel state measurement of the first user and the channel state measurement of the second user.

5. A communications method, comprising:
receiving (S1105), by a terminal device (1901) through a first user and/or a second user, first information sent by a first network device (1902), wherein the first information is used to indicate that the second user performs channel state measurement by using a configuration or resource of the first user, and the first network device is a network device that the first user accesses or camps on;
determining (S1106), by the terminal device (1901) based on the first information, that the second user performs the channel state measurement by using the configuration or resource of the first user; and
sending (S1107), by the terminal device, a reference signal to the first network device through the first user, and omitting to send another reference signal to the first network device through the second user;
wherein the first user is a first user identity card, and the second user is a second user identity card; and
wherein the second user and the first user share the terminal device (1901).

6. The method according to claim 5, wherein public land mobile networks PLMNs of the first network device (1902) and a second network device (1903) are the same, and the second network device is a network device that the second user accesses or camps on.

7. The method according to any one of claims 5 to 6, further comprising:
before the terminal device (1901) receives (S1105) the first information, receiving (S1103, S1103'), by the terminal device through the first user and/or the second user, second information sent by the first network device (1902), wherein the second information is used to indicate that channel state measurement of the first user and the channel state measurement of the second user are bound.

8. The method according to claim 7, further comprising:
before the terminal device (1901) receives (S1103, S1103') the second information, sending (S1102, S1102'), by the terminal device, third information to the first network device (1902) through the first user and/or the second user, wherein the third information is used to request to bind the channel state measurement of the first user and the channel state measurement of the second user.

9. A communications apparatus, wherein the communications apparatus is a first network device (1902) or a component of a first network device, and wherein the apparatus comprises: a memory and a processor;
the memory is configured to store program code; and
the processor invokes the program code, and is configured to perform the communications method according to any one of claims 1 to 4 when the program code is executed.

10. A communications apparatus, wherein the communications apparatus is a terminal device (1901) or a component of a terminal device, and wherein the apparatus comprises: a memory and a processor;
the memory is configured to store program code; and
the processor invokes the program code, and is configured to perform the communications method according to any one of claims 5 to 8 when the program code is executed.

11. A computer-readable storage medium, wherein the computer-readable storage medium stores a computer program, the computer program comprises at least one segment of code, and
when the at least one segment of code is executed by a processor of a first network device, it performs the communications method according to any one of claims 1 to 4, or
when the at least one segment of code is executed by a processor of a terminal device, it performs the communications method according to any one of claims 5 to 8.

## Patentansprüche

1. Kommunikationsverfahren, umfassend:
Erzeugen (S1104) erster Informationen durch eine erste Netzwerkvorrichtung (1902), wobei die ersten Informationen verwendet werden, um anzugeben, dass ein zweiter Benutzer eine Kanalzustandsmessung durch Verwenden einer Konfiguration oder Ressource eines ersten Benutzers durchführt, und die erste Netzwerkvorrichtung eine Netzwerkvorrichtung ist, auf die der erste Benutzer zugreift oder wartet;
Senden (S1105) der ersten Informationen durch die erste Netzwerkvorrichtung (1902) an den ersten Benutzer und/oder den zweiten Benutzer;
Empfangen (S1107) eines Referenzsignals durch die erste Netzwerkvorrichtung (1902), das für die Kanalzustandsmessung verwendet werden soll und von dem ersten Benutzer gesendet wird;
Durchführen (S1108) der Kanalzustandsmessung durch die erste Netzwerkvorrichtung (1902) für den ersten Benutzer und den zweiten Benutzer basierend auf dem Referenzsignal;
wobei der erste Benutzer eine erste Benutzeridentitätskarte ist und der zweite Benutzer eine zweite Benutzeridentitätskarte ist; und
wobei sich der erste Benutzer und der zweite Benutzer die gleiche Endgerätevorrichtung (1901) teilen.

2. Verfahren nach Anspruch 1, wobei öffentliche Landfunknetzwerke, PLMNs, der ersten Netzwerkvorrichtung (1902) und einer zweiten Netzwerkvorrichtung (1903) gleich sind und die zweite Netzwerkvorrichtung eine Netzwerkvorrichtung ist, auf die der zweite Benutzer zugreift oder wartet.

3. Verfahren nach einem der Ansprüche 1 bis 2, wobei das Verfahren ferner Folgendes umfasst:
vor dem Senden (S1105) der ersten Informationen durch die erste Netzwerkvorrichtung (1902) Senden (S1103, S1103') zweiter Informationen durch die erste Netzwerkvorrichtung an den ersten Benutzer und/oder den zweiten Benutzer, wobei die zweiten Informationen verwendet werden, um anzugeben, dass eine Kanalzustandsmessung des ersten Benutzers und die Kanalzustandsmessung des zweiten Benutzers gebunden sind.

4. Verfahren nach Anspruch 3, ferner umfassend:
vor dem Senden (S1103, S1103') der zweiten Informationen durch die erste Netzwerkvorrichtung (1902) Empfangen (S1102, S1102') dritter Informationen durch die erste Netzwerkvorrichtung, die von dem ersten Benutzer und/oder dem zweiten Benutzer gesendet werden, wobei die dritten Informationen verwendet werden, um Bindung der Kanalzustandsmessung des ersten Benutzers und der Kanalzustandsmessung des zweiten Benutzers anzufordern.

5. Kommunikationsverfahren, umfassend:
Empfangen (S1105) erster Informationen durch eine Endgerätevorrichtung (1901) über einen ersten Benutzer und/oder einen zweiten Benutzer, wobei die ersten Informationen von einer ersten Netzwerkvorrichtung (1902) gesendet werden, wobei die ersten Informationen verwendet werden, um anzugeben, dass der zweite Benutzer eine Kanalzustandsmessung durch Verwenden einer Konfiguration oder Ressource des ersten Benutzers durchführt, und die erste Netzwerkvorrichtung eine Netzwerkvorrichtung ist, auf die der erste Benutzer zugreift oder wartet;
Bestimmen (S1106) durch die Endgerätevorrichtung (1901) basierend auf den ersten Informationen, dass der zweite Benutzer die Kanalzustandsmessung durch Verwenden der Konfiguration oder Ressource des ersten Benutzers durchführt; und
Senden (S1107) eines Referenzsignals durch die Endgerätevorrichtung über den ersten Benutzer an die erste Netzwerkvorrichtung und Unterlassen des Sendens eines anderen Referenzsignals über den zweiten Benutzer an die erste Netzwerkvorrichtung;
wobei der erste Benutzer eine erste Benutzeridentitätskarte ist und der zweite Benutzer eine zweite Benutzeridentitätskarte ist; und
wobei sich der zweite Benutzer und der ersten Benutzer die Endgerätevorrichtung (1901) teilen.

6. Verfahren nach Anspruch 5, wobei öffentliche Landfunknetzwerke, PLMNs, der ersten Netzwerkvorrichtung (1902) und einer zweiten Netzwerkvorrichtung (1903) gleich sind und die zweite Netzwerkvorrichtung eine Netzwerkvorrichtung ist, auf die der zweite Benutzer zugreift oder wartet.

7. Verfahren nach einem der Ansprüche 5 bis 6, ferner umfassend:
vor dem Empfangen (S1105) der ersten Informationen durch die Endgerätevorrichtung (1901) Empfangen (S1103, S1103') zweiter Informationen durch die Endgerätevorrichtung über den ersten Benutzer und/oder den zweiten Benutzer, wobei die zweiten Informationen von der ersten Netzwerkvorrichtung (1902) gesendet werden, wobei die zweiten Informationen verwendet werden, um anzugeben, dass eine Kanalzustandsmessung des ersten Benutzers und die Kanalzustandsmessung des zweiten Benutzers gebunden sind.

8. Verfahren nach Anspruch 7, ferner umfassend:
vor dem Empfangen (S1103, S1103') der zweiten Informationen durch die Endgerätevorrichtung (1901) Senden (S1102, S1102') dritter Informationen durch die Endgerätevorrichtung über den ersten Benutzer und/oder den zweiten Benutzer an die erste Netzwerkvorrichtung (1902),
wobei die dritten Informationen verwendet werden, um Bindung der Kanalzustandsmessung der ersten Benutzers und der Kanalzustandsmessung des zweiten Benutzers anzufordern.

9. Kommunikationsgerät, wobei das Kommunikationsgerät eine erste Netzwerkvorrichtung (1902) oder eine Komponente einer ersten Netzwerkvorrichtung ist, und wobei das Gerät Folgendes umfasst: einen Speicher und einen Prozessor;
wobei der Speicher zum Speichern von Programmcode ausgelegt ist; und
der Prozessor den Programmcode aufruft und dazu ausgelegt ist, das Kommunikationsverfahren nach einem der Ansprüche 1 bis 4 durchzuführen, wenn der Programmcode ausgeführt wird.

10. Kommunikationsgerät, wobei das Kommunikationsgerät eine Endgerätevorrichtung (1901) oder eine Komponente einer Endgerätevorrichtung ist, und wobei das Gerät Folgendes umfasst: einen Speicher und einen Prozessor;
wobei der Speicher zum Speichern von Programmcode ausgelegt ist; und
der Prozessor den Programmcode aufruft und dazu ausgelegt ist, das Kommunikationsverfahren nach einem der Ansprüche 5 bis 8 durchzuführen, wenn der Programmcode ausgeführt wird.

11. Computerlesbares Speichermedium, wobei das computerlesbare Speichermedium ein Computerprogramm speichert, wobei das Computerprogramm mindestens ein Codesegment umfasst und
wobei das mindestens eine Codesegment, wenn es von einem Prozessor einer ersten Netzwerkvorrichtung ausgeführt wird, das Kommunikationsverfahren nach einem der Ansprüche 1 bis 4 durchführt, oder
wobei das mindestens eine Codesegment, wenn es von einem Prozessor einer Endgerätevorrichtung ausgeführt wird, das Kommunikationsverfahren nach einem der Ansprüche 5 bis 8 durchführt.

## Revendications

1. Procédé de communication, comprenant :
la génération (S1104), par un premier dispositif de réseau (1902), de premières informations, dans lequel les premières informations sont utilisées pour indiquer qu'un deuxième utilisateur exécute une mesure d'état de canal en utilisant une configuration ou une ressource d'un premier utilisateur, et le premier dispositif de réseau est un dispositif de réseau auquel le premier utilisateur a accès ou sur lequel il se met en attente ;
l'envoi (S1105), par le premier dispositif de réseau (1902), des premières informations au premier utilisateur et/ou au deuxième utilisateur ;
la réception (S1107), par le premier dispositif de réseau (1902), d'un signal de référence qui doit être utilisé pour une mesure d'état de canal et envoyé par le premier utilisateur ;
l'exécution (S1108), par le premier dispositif de réseau (1902), d'une mesure d'état de canal pour le premier utilisateur et le deuxième utilisateur sur la base du signal de référence ;
dans lequel le premier utilisateur est une première carte d'identité d'utilisateur, et le deuxième utilisateur est une deuxième carte d'identité d'utilisateur ; et
dans lequel le premier utilisateur et le deuxième utilisateur partagent un même dispositif terminal (1901).

2. Procédé selon la revendication 1, dans lequel des réseaux mobiles terrestres publics PLMN du premier dispositif de réseau (1902) et d'un deuxième dispositif de réseau (1903) sont les mêmes, et le deuxième dispositif de réseau est un dispositif de réseau auquel le deuxième utilisateur a accès ou sur lequel il se met en attente.

3. Procédé selon l'une quelconque des revendications 1 à 2, dans lequel le procédé comprend en outre :
avant que le premier dispositif de réseau (1902) n'envoie (S1105) les premières informations, l'envoi (S1103, S1103'), par le premier dispositif de réseau, de deuxièmes informations au premier utilisateur et/ou au deuxième utilisateur, dans lequel les deuxièmes informations sont utilisées pour indiquer qu'une mesure d'état de canal du premier utilisateur et que la mesure d'état de canal du deuxième utilisateur sont liées.

4. Procédé selon la revendication 3, comprenant en outre :
avant que le premier dispositif de réseau (1902) n'envoie (S1103, S1103') les deuxièmes informations, la réception (S1102, S1102'), par le premier dispositif de réseau, de troisièmes informations envoyées par le premier utilisateur et/ou le deuxième utilisateur, dans lequel les troisièmes informations sont utilisées pour demander de lier la mesure d'état de canal du premier utilisateur et la mesure d'état de canal du deuxième utilisateur.

5. Procédé de communication, comprenant :
la réception (S1105), par un dispositif terminal (1901) par le biais d'un premier utilisateur et/ou d'un deuxième utilisateur, de premières informations envoyées par un premier dispositif de réseau (1902), dans lequel les premières informations sont utilisées pour indiquer que le deuxième utilisateur exécute une mesure d'état de canal en utilisant une configuration ou une ressource du premier utilisateur, et le premier dispositif de réseau est un dispositif de réseau auquel le premier utilisateur a accès ou sur lequel il se met en attente ;
la détermination (S1106), par le dispositif terminal (1901) sur la base des premières informations, que le deuxième utilisateur exécute la mesure d'état de canal en utilisant la configuration ou la ressource du premier utilisateur ; et
l'envoi (S1107), par le dispositif terminal, d'un signal de référence au premier dispositif de réseau par le biais du premier utilisateur, et l'omission d'envoyer un autre signal de référence au premier dispositif de réseau par le biais du deuxième utilisateur ;
dans lequel le premier utilisateur est une première carte d'identité d'utilisateur, et le deuxième utilisateur est une deuxième carte d'identité d'utilisateur ; et
dans lequel le deuxième utilisateur et le premier utilisateur partagent le dispositif terminal (1901).

6. Procédé selon la revendication 5, dans lequel des réseaux mobiles terrestres publics PLMN du premier dispositif de réseau (1902) et d'un deuxième dispositif de réseau (1903) sont les mêmes, et le deuxième dispositif de réseau est un dispositif de réseau auquel le deuxième utilisateur a accès ou sur lequel il se met en attente.

7. Procédé selon l'une quelconque des revendications 5 à 6, comprenant en outre :
avant que le dispositif terminal (1901) ne reçoive (S1105) les premières informations, la réception (S1103, S1103'), par le dispositif terminal par le biais du premier utilisateur et/ou du deuxième utilisateur, de deuxièmes informations envoyées par le premier dispositif de réseau (1902), dans lequel les deuxièmes informations sont utilisées pour indiquer qu'une mesure d'état de canal du premier utilisateur et que la mesure d'état de canal du deuxième utilisateur sont liées.

8. Procédé selon la revendication 7, comprenant en outre :
avant que le dispositif terminal (1901) ne reçoive (S1103, S1103') les deuxièmes informations, l'envoi (S1102, S1102'), par le dispositif terminal, de troisièmes informations au premier dispositif de réseau (1902) par le biais du premier utilisateur et/ou du deuxième utilisateur, dans lequel les troisièmes informations sont utilisées pour demander de lier la mesure d'état de canal du premier utilisateur et la mesure d'état de canal du deuxième utilisateur.

9. Appareil de communication, dans lequel l'appareil de communication est un premier dispositif de réseau (1902) ou un composant d'un premier dispositif de réseau, et dans lequel l'appareil comprend : une mémoire et un processeur ;
la mémoire est configurée pour stocker un code de programme ; et
le processeur invoque le code de programme, et est configuré pour exécuter le procédé de communication selon l'une quelconque des revendications 1 à 4 lorsque le code de programme est exécuté.

10. Appareil de communication, dans lequel l'appareil de communication est un dispositif terminal (1901) ou un composant d'un dispositif terminal, et dans lequel l'appareil comprend : une mémoire et un processeur ;
la mémoire est configurée pour stocker un code de programme ; et
le processeur invoque le code de programme, et est configuré pour exécuter le procédé de communication selon l'une quelconque des revendications 5 à 8 lorsque le code de programme est exécuté.

11. Support d'enregistrement lisible par ordinateur, dans lequel le support d'enregistrement lisible par ordinateur stocke un programme informatique, le programme informatique comprend au moins un segment de code, et
lorsque l'au moins un segment de code est exécuté par un processeur d'un premier dispositif de réseau, il exécute le procédé de communication selon l'une quelconque des revendications 1 à 4, ou
lorsque l'au moins un segment de code est exécuté par un processeur d'un dispositif terminal, il exécute le procédé de communication selon l'une quelconque des revendications 5 à 8.
